# EUROPEAN PATENT SPECIFICATION

(11) **EP 4 541 240 B1**
(45) Date of publication and mention of the grant of the patent: **25.11.2026**
(21) Application number: 24206453.3
(22) Date of filing: 14.10.2024
(51) Int. Cl.: A47J 37/06

(54) **AIR FRYER WITH EXCELLENT COOKING PERFORMANCE**
LUFTFRITTEUSE MIT HERVORRAGENDER KOCHLEISTUNG
FRITEUSE À AIR CHAUD AYANT UNE EXCELLENTE PERFORMANCE DE CUISSON

(30) Priority: 16.10.2023 CN 202322773547 U; 23.08.2024 CN 202422061596 U; 23.08.2024 CN 202422063432 U; 23.08.2024 CN 202422066269 U; 23.08.2024 CN 202422071470 U
(43) Date of publication of application: 23.04.2025
(73) Proprietor: Ningbo Careline Electric Appliance Co., Ltd., Ningbo, Zhejiang 315000 (CN)
(72) Inventor: ZHANG, Yichi, Ningbo, Zhejiang (CN); BAI, Rongjie, Ningbo, Zhejiang (CN); LIANG, Jiahe, Ningbo, Zhejiang (CN); LIANG, Kunqiu, Ningbo, Zhejiang (CN); TAO, Zhiqiang, Ningbo, Zhejiang (CN); CHEN, Qunyang, Ningbo, Zhejiang (CN); WANG, Xuewei, Ningbo, Zhejiang (CN); YAN, Ting, Ningbo, Zhejiang (CN)
(74) Representative: Meyer-Dulheuer MD Legal Patentanwälte PartG mbB

(56) References cited:
- CN-A- 114 916 841
- CN-A- 115 530 638
- CN-U- 213 488 425
- CN-U- 214 341 886
- CN-U- 214 484 284
- CN-U- 215 686 983
- CN-U- 217 488 362
- CN-U- 218 635 846
- CN-U- 219 306 517

## Description

### CROSS-REFERENCE TO RELATED APPLICATIONS

The present disclosure claims the priority of Chinese patent application No. 2023227735472, filed to the CNIPA on October 16, 2023 and entitled "Air Fryer with Excellent Cooking Performance", Chinese patent application No. 2024220615968, filed to the CNIPA on August 23, 2024 and entitled "Air Fryer with Convenient Use", Chinese patent application No. 2024220634329, filed to the CNIPA on August 23, 2024 and entitled "Air Fryer with Convenient Installation", Chinese patent application No.2024220662691 , filed to the CNIPA on August 23, 2024 and entitled "Multifunctional Air Fryer", and Chinese patent application No. 2024220714709, filed to the CNIPA on August 23, 2024 and entitled "Air Fryer with Good Heat Dissipation'.

### TECHNICAL FIELD

This disclosure relates to the field of kitchen appliances and cooking electrical appliance technology, specifically to an air fryer, particularly to an air fryer with excellent cooking performance.

### BACKGROUND

Most of the existing air fryers are drawer-type air fryers, which including a fryer body and a drawer-type fryer basket. The fryer body has a cooking cavity, and the drawer-type fryer basket can be pulled out and placed inside the cooking cavity. During the cooking process, the cooking cavity of this type of air fryer is a closed structure. If it is necessary to add water, oil, and other seasonings to the drawer-type fryer basket, the drawer-type fryer basket needs to be pulled out. Pulling out the drawer-type fryer basket will cause the heat flow in the cooking cavity to leak out, thereby affecting the cooking effect of the food. At the same time, if seasonings are added after the food is cooked, it is easy to make the seasonings unable to mix evenly with the food or not taste good, thereby affecting the overall taste of the food and making the user experience poor. CN 217 488 362 U relates to an air fryer including a body, a cooking cavity located inside the body and a frying system, wherein the cooking cavity is connected to the frying system, and the body has multiple seasoning boxes on the outside, and the body has multiple feeding mechanisms corresponding to the seasoning boxes inside, one end of the multiple feeding mechanisms is connected to the corresponding seasoning box, and the other end is connected to the cooking cavity, the front side top of the body has an installation slot with an open top, the installation slot has a seasoning box with an inner cavity, the installation cavity on the rear side of the installation slot in the body has electrical components inside, the bottom wall of the installation slot is suitable for being a sloping surface structure that inclines from the rear side to the front side opening direction, the front side opening of the installation slot is the outer shell of the body.

### SUMMARY

In order to solve the above at least one technical problem, the present invention discloses the following technical solutions:
An air fryer with excellent cooking performance, including a body, a cooking cavity located inside the body, and a frying system, wherein the cooking cavity is connected to the frying system, and the body has multiple seasoning boxes on the outside, and the body has multiple feeding mechanisms corresponding to the seasoning boxes inside, one end of the multiple feeding mechanisms is connected to the corresponding seasoning box, and the other end is connected to the cooking cavity, the front side top of the body has an installation slot with an open top, the installation slot has a detachable seasoning box with an inner cavity, the side wall top of the installation slot has a recess for fingers to reach in, the recess is opposite the side wall of the seasoning box, wherein the installation cavity on the rear side of the installation slot in the body has electrical components inside, the top of the body has a top cover covering the installation cavity, and at least part of the connection between the top cover and the side wall of the installation slot has a water-blocking structure, the water-blocking structure including a water-blocking rib, the water-blocking rib is suitable for being located on the inner side of the top cover and is formed by extending upward from the outer edge of the open top of the installation slot; and further, the bottom wall of the installation slot is suitable for being a sloping surface structure that inclines from the rear side to the front side opening direction, the front side opening of the installation slot is the outer shell of the body, and a sealing member is provided at the connection between the inner wall of the installation slot and the outer shell of the body, the inner wall of the installation slot is suitable for being in contact with the outer shell of the body through the sealing member.

In one or more embodiments, the seasoning box including a first seasoning box and a second seasoning box, the feeding mechanism including a first feeding mechanism connected to the first seasoning box and the cooking cavity, and a second feeding mechanism connected to the second seasoning box and the cooking cavity, the first seasoning box and the second seasoning box are arranged in parallel on the top of the body, the first seasoning box and the second seasoning box are detachably mounted on the top of the body; and further, the first seasoning box and the second seasoning box are integrated, and the side walls of the first seasoning box and the second seasoning box have a visual area, and the visual area has capacity scale lines corresponding to the first seasoning box and the second seasoning box.

In one or more embodiments, one side of the body has an open mouth connected to the cooking cavity, the open mouth has a flip door component, or the open mouth has a drawer-type food basket that can be inserted into the cooking cavity, the seasoning box is mounted on the body above the open mouth, the seasoning box including at least one oil box for holding oil and at least one water box for holding water.

In one or more embodiments, the inner wall of the recess is an arc-shaped surface structure extending towards the inside of the installation slot, the front side of the installation slot has a front opening corresponding to the front side wall of the seasoning box, the rear side top of the installation slot has the recess, the recess is suitable for being located in the middle of the rear side wall of the installation slot; and further, the inner cavity including a first inner cavity and a second inner cavity, the seasoning box has a vertical partition plate for separating the first inner cavity and the second inner cavity, the projection part of the partition plate on the side wall of the installation slot is located in the recess.

In one or more embodiments, the body has an installation slot with an open top, the installation slot has a detachable seasoning box with an inner cavity that is connected to the cooking cavity, one of the seasoning box and the installation slot has a vertical guiding part that extends and protrudes from both side walls, and the other has a guiding groove that matches the guiding part, when the guiding part is aligned with the opening of the guiding groove, the seasoning box can be moved towards the bottom of the installation slot.

In one or more embodiments, the guiding groove is a structure that gradually in width decreases from the bottom wall towards the opening direction, when the seasoning box is installed in the installation slot, at least part of the outer wall of the guiding part is in contact with the corresponding inner wall of the guiding groove; and further, one end of the guiding part and the guiding groove corresponding to the opening has an inclined guiding surface, the cross-sectional area of the guiding surface is smaller than the cross-sectional area of the opening of the guiding groove, when the seasoning box is installed in the installation slot, at least part of the outer wall of the guiding part is in contact with the corresponding inner wall of the guiding groove.

In one or more embodiments, the distance between the top of the guiding part or the guiding groove and the top of the side wall of the installation slot is L, and satisfy L > 0.

In one or more embodiments, the inner cavity including a first inner cavity and a second inner cavity, there are a first plug and a second plug respectively connected to the first inner cavity below and the second inner cavity below; the body has a first feeding mechanism and a second feeding mechanism connected to the cooking cavity, the first feeding mechanism and the second feeding mechanism including a first slot and a second slot respectively corresponding to the first plugfand the second plug and located at the bottom of the installation slot, when the guiding part is aligned with the opening of the guiding groove, the seasoning box is moved towards the bottom of the installation slot, the first plug and the second plug are suitable for being detachably plugged into the first slot and the second slot respectively, the bottom of the first inner cavity and the second inner cavity respectively have a first outlet and a second outlet connected to the first plug and the second plug, and the first plug and the second plug are respectively movably provided with the first blocking member and the second blocking member for closing the first outlet and the second outlet; the first slot and the second slot have a first plunger and a second plunger extending upward, when the guiding part is aligned with the opening of the guiding groove, and the seasoning box is moved towards the bottom of the installation slot until the first plug and the second plug are respectively plugged into the first slot and the second slot, the first plunger and the second plunger are suitable for extending into the first plug and the second plug respectively to drive the first blocking member and the second blocking member to move upward, thereby opening the first outlet and the second outlet.

In one or more embodiments, the body has a detachable seasoning box with an inner cavity on the top, the inner cavity including a first inner cavity and a second inner cavity; the body has a feeding mechanism inside, the feeding mechanism including a first feeding mechanism and a second feeding mechanism respectively connected to the cooking cavity and the first inner cavity and the second inner cavity, the second feeding mechanism including a second pump, an oil spray nozzle extending into the cooking cavity, an oil pipeline connecting the second inner cavity and the second pump and the oil spray nozzle, the oil pipeline including a first oil pipeline, both ends of the first oil pipeline have threaded connecting heads, the first oil pipeline is suitable for being threadedly connected to the second pump and the oil spray nozzle.

In one or more embodiments, there is an annular flange extending outwardly on the outside of the oil spray nozzle, one side of the annular flange has a connecting piece that can be removably mounted on the oil spray nozzle; the top of the cooking cavity has an air duct plate, the air duct plate has an oil spray hole, the oil spray nozzle is suitable for extending into the cooking cavity through the oil spray hole, the connecting piece and the annular flange are suitable for being respectively located on both sides of the oil spray hole, in contact with both sides of the air duct plate where the oil spray hole is located, the inner side of the connecting piece has a first internal thread, the outside of the oil spray nozzle has a first external thread that matches the first internal thread, the connecting piece is suitable for being threadedly connected to the oil spray nozzle, the oil spray nozzle including an installation seat with an annular flange on the outside and a nozzle body, the installation seat has a receiving groove connected to the oil pipeline, the inner wall of the receiving groove has a second internal thread, one end of the nozzle body has a connecting part that can be inserted into the receiving groove, the outside of the connecting part has a second external thread that matches the second internal thread, the connecting part of the nozzle body is suitable for being threadedly connected to the receiving groove of the installation seat, the nozzle body has a nozzle cap sleeved on the outside, the inner side of the nozzle cap has a third internal thread, the outside of the nozzle body has a third external thread that matches the third internal thread, the nozzle cap is suitable for being threadedly connected to the nozzle body.

In one or more embodiments, the first feeding mechanism including a first pump, a water spray nozzle extending into the cooking cavity, and a water pipeline connecting the first inner cavity and the first pump and the water spray nozzle, the water pipeline including a first water pipeline, and both ends of the first water pipeline have fasteners that can be tightened, both ends of the first water pipeline are respectively plugged into the first pump and the water spray nozzle, and are fixedly connected to the first pump and the water spray nozzle by the fasteners.

In one or more embodiments, wherein the top of the body has an installation slot with an open top, the installation slot has a detachable seasoning box with an inner cavity, the inner cavity including a first inner cavity and a second inner cavity; the body has an installation cavity, the installation cavity has a feeding mechanism connected to the cooking cavity and the first inner cavity and the second inner cavity, the feeding mechanism including a first pump and a second pump respectively connected to the first inner cavity and the second inner cavity; the body has a heat dissipation air duct connected to the installation cavity, the heat dissipation air duct has a heat dissipation component for generating a cooling airflow, the body has a first air inlet connected to the installation cavity and the atmosphere near the first pump, a second air inlet connected to the installation cavity and the atmosphere near the second pump.

In one or more embodiments, the installation cavity has a control system electrically connected to the feeding mechanism, the first pump and the second pump are respectively located on both sides of the control system, the rear side of the control system has a drive system electrically connected to the control system and extended rearward to drive the heat dissipation component, the body has a third air inlet near the drive system; and
further, the top of the side wall of the installation slot has a recess for fingers to reach in to hold the seasoning box, the inner wall of the recess is a round arc-shaped guiding structure extending from the top of the side wall of the installation slot towards the bottom of the seasoning box, the installation cavity has a control system electrically connected to the feeding mechanism, the recess has a fourth air inlet connected to the installation cavity, the fourth air inlet is suitable for being set near the control system, the inner side of the fourth air inlet has a water-blocking rib, the water-blocking rib is suitable for covering at least part of the fourth air inlet.

### BRIEF DESCRIPTION OF THE DRAWINGS

To illustrate the technical solutions in the specific embodiments of the present disclosure or the prior art more clearly, the accompanying drawings required for use in the specific embodiments or the prior art will be briefly described below, and obviously, the accompanying drawings in the description are some embodiments of the present disclosure, and other drawings can be obtained from these drawings for those of ordinary skill in the art without paying inventive steps.
FIG. 1 is a schematic view of the air fryer with excellent cooking performance of this application.
FIG. 2 is a front view of the air fryer with excellent cooking performance of this application.
FIG. 3 is a first perspective overall cross-sectional view of the air fryer with excellent cooking performance of this application.
FIG. 4 is a second perspective overall cross-sectional view of the air fryer with excellent cooking performance of this application.
FIG. 5 is a partial structural decomposition schematic diagram of the air fryer with excellent cooking performance of this application.
FIG. 6 is a first perspective cross-sectional view of a partial structure of the air fryer with excellent cooking performance of this application.
FIG. 7 is a second perspective cross-sectional view of a partial structure of the air fryer with excellent cooking performance of this application.
FIG. 8 is a schematic diagram of a partial feeding mechanism of the air fryer with excellent cooking performance of this application.
FIG. 9 is a cross-sectional view of a partial feeding mechanism of the air fryer with excellent cooking performance of this application.

Signs: 10-body; 11-cooking cavity; 12-installation slot; 121-recess; 122-fourth air outlet; 13-installation cavity; 14-top cover; 151-air duct plate; 16-heat dissipation air duct; 161-fifth air outlet; 17-first air inlet; 18-second air inlet; 19-third air outlet; 20-hot air circulation system; 30-seasoning box; 31-inner cavity; 311-first inner cavity; 312-second inner cavity; 313-first outlet; 314-second outlet; 32-first seasoning box; 33-second seasoning box; 34-partition plate; 35-first plug; 36-second plug; 37-first sealing member; 38-second sealing member; 40-feeding mechanism; 41-first feeding mechanism; 411-first slot; 412-first plunger; 413-first pump; 414-water spray nozzle; 415-water pipeline; 4151-first water pipeline; 416-fastener; 42-second feeding mechanism; 421-second slot; 422-second plunger; 423-second pump; 424-oil spray nozzle; 4241-annular flange; 4242-mounting seat; 4243-nozzle body; 4244-nozzle cap; 425-oil pipeline; 4251-first oil pipeline; 426-connector; 427-connecting piece; 50-water blocking structure; 51-water blocking rib; 60-guiding structure; 61-guiding part; 611-guiding surface; 62-guiding groove; heat dissipation component-70; 80-control system; 90-drive system.

### DETAILED DESCRIPTION

The present disclosure provides an air fryer with excellent cooking performance to solve the technical problem of poor taste and poor user experience of the existing air fryers.

In order to solve the above technical problems, the present disclosure provides an air fryer with excellent cooking performance, including a body, a cooking cavity located inside the body, and a frying system, the cooking cavity is connected with the frying system, the body has multiple seasoning boxes on the outside, and the body has multiple feeding mechanisms corresponding to the seasoning boxes inside, one end of the multiple feeding mechanisms is connected with the corresponding seasoning box, and the other end is connected with the cooking cavity, the front side top of the body has an installation slot with an open top, the installation slot has a detachable seasoning box with an inner cavity, the side wall top of the installation slot has a recess for fingers to reach in, the recess is opposite the side wall of the seasoning box, wherein the installation cavity on the rear side of the installation slot in the body has electrical components inside, the top of the body has a top cover covering the installation cavity, and at least part of the connection between the top cover and the side wall of the installation slot has a water-blocking structure, the water-blocking structure including a water-blocking rib, the water-blocking rib is suitable for being located on the inner side of the top cover and is formed by extending upward from the outer edge of the open top of the installation slot; and further, the bottom wall of the installation slot is suitable for being a sloping surface structure that inclines from the rear side to the front side opening direction, the front side opening of the installation slot is the outer shell of the body, and a sealing member is provided at the connection between the inner wall of the installation slot and the outer shell of the body, the inner wall of the installation slot is suitable for being in contact with the outer shell of the body through the sealing member. This present can achieve adding water, oil, and other seasonings to the food in the cooking cavity by setting multiple seasoning boxes on the body, which can not only greatly enrich the taste and texture of the food but also effectively improve the cooking effect of the food and improve the user experience. By setting the installation slot on the top of the body to install the seasoning box and setting the recess for fingers on the side wall top of the installation slot, users can insert their fingers into the recess to hold the seasoning box, thereby better installing and removing the seasoning box, effectively reducing the difficulty of installing and removing the seasoning box, and also reducing the difficulty of adding and replacing oil and/or water in the seasoning box, effectively enhancing user convenience and user experience. When the seasoning box is installed and removed, not only does the seasoning box itself easily generate residual liquid, but residual liquid also tends to adhere to the outer wall of the seasoning box. Therefore, by setting the water-blocking structure at the connection between the top cover and the side wall of the installation slot, it is possible to block the residual liquid generated by the seasoning box and the residual liquid adhered to the outer wall of the seasoning box, preventing the residual liquid from flowing into the installation cavity through the connection gap between the top cover and the side wall of the installation slot, thereby causing damage to the electrical components inside the installation cavity and effectively enhancing the performance stability and safety of use of the air fryer. At the same time, by setting the water-blocking rib on the inner side of the top cover and forming it by extending upward from the outer edge of the open top of the installation slot, it is possible to hide the water-blocking rib, enhance the overall aesthetics of the air fryer, simplify the structure of the air fryer, reduce production cost and usage cost and improve user experience. By providing a sealing member at the connection between the inner wall of the installation slot and the outer shell of the body, a sealed connection between the outer shell of the body and the inner wall of the installation slot can be achieved, preventing the liquid in the installation slot from flowing into the body through the connection gap between the outer shell of the body and the inner wall of the installation slot, thereby causing damage to the electrical components inside the body and effectively enhancing the safety and performance stability of the air fryer.

In an optional embodiment, the seasoning box including a first seasoning box and a second seasoning box. The feeding mechanism including a first feeding mechanism connected to the first seasoning box and the cooking cavity, and a second feeding mechanism connected to the second seasoning box and the cooking cavity. The first seasoning box and the second seasoning box are arranged in parallel on the top of the body and can be detachably mounted on the top of the body. By arranging the first seasoning box and the second seasoning box in parallel on the top of the body, it is not only convenient for the user to observe the seasoning box but also conducive to adding and replacing seasonings, effectively enhancing the practicality of the product. At the same time, by detachably mounting the first seasoning box and the second seasoning box on the top of the body, it is also convenient to take down the first seasoning box and the second seasoning box for cleaning and adding seasonings, further enhancing the practicality of the product.

In an optional embodiment, the first seasoning box and the second seasoning box are integrated, and the side walls of the first and second seasoning boxes have a visual area. The visual area has capacity scale lines corresponding to the first and second seasoning boxes. By designing the first seasoning box and the second seasoning box as an integrated structure, the product structure can be simplified, and the production cost can be reduced. At the same time, by setting the visual area on the side walls of the first and second seasoning boxes, users can observe the remaining amount of seasonings in the first and second seasoning boxes in time, so as to add seasonings in time. In addition, by setting the capacity scale lines corresponding to the first and second seasoning boxes in the visual area, users can understand the amount of added seasonings, thereby achieving better auxiliary cooking and better cooking results.

In an optional embodiment, one side of the body has an open mouth connected to the cooking cavity, and the open mouth has a flip door component, or the open mouth has a drawer-type food basket that can be inserted into the cooking cavity. The seasoning box is mounted on the body above the open mouth, and the seasoning box including at least one oil box for holding oil and at least one water box for holding water. By setting the seasoning box above the open mouth of the cooking cavity, that is, on the front of the air fryer, users can more conveniently understand the state of the seasonings in the seasoning box, thereby enhancing the practicality and user experience of the product. At the same time, the water box can add water to the cooking cavity to increase the water content in the food and avoid the dry taste of the food; the oil box can add oil to the cooking cavity to make the food taste more crispy, thereby achieving better cooking results.

In an optional embodiment, the inner wall of the recess is an arc-shaped surface structure extending towards the inside of the installation slot from the top of the side wall of the installation slot, the front side of the installation slot has a front opening corresponding to the front side wall of the seasoning box, and the top of the rear side of the installation slot has a recess, the recess is suitable for being located in the middle of the rear side wall of the installation slot. By setting the recess as an arc-shaped surface structure extending towards the inside of the installation slot, not only can it facilitate the user's fingers to hold the seasoning box, effectively enhancing user convenience, but it can also avoid the residual liquid formed during the disassembly and installation of the seasoning box accumulating in the recess, thereby affecting the user experience. At the same time, by setting the front opening corresponding to the front side wall of the seasoning box on the front side of the installation slot, it is convenient for the user to hold the seasoning box for installation and removal, effectively enhancing the convenience of use of the seasoning box. In addition, by setting the recess in the middle of the rear side wall of the installation slot, it not only effectively enhances the overall aesthetics of the air fryer but also facilitates the user to hold and operate the seasoning box, effectively enhancing the convenience of use of the seasoning box and user experience.

In an optional embodiment, the inner cavity including a first inner cavity and a second inner cavity, and the seasoning box has a vertical partition plate inside to separate the first inner cavity and the second inner cavity, the projection part of the partition plate on the side wall of the installation slot is located in the recess. By setting the partition plate that extends vertically and corresponds to the recess inside the seasoning box, not only can the first inner cavity and the second inner cavity be separated, but the performance stability and structural strength of the seasoning box can also be effectively enhanced, reducing the occurrence of deformation or damage to the seasoning box when users hold the seasoning box.

In an optional embodiment, the body has an installation slot with an open top, and the installation slot has a detachable seasoning box with an inner cavity that is connected to the cooking cavity, the seasoning box and the installation slot each have a vertical guiding part that extends and protrudes from both side walls, and the other has a guiding groove that matches the guiding part. When the guiding part is aligned with the opening of the guiding groove, the seasoning box can be moved towards the bottom of the installation slot. By setting the guiding part and the guiding groove on both side walls of the installation slot and the seasoning box, not only can the installation of the seasoning box be guided, effectively reducing the difficulty of installing the seasoning box and enhancing the convenience of adding oil and/or water to the seasoning box, but also the positioning of the seasoning box can be achieved, reducing the situation where the seasoning box is damaged due to sliding and falling, effectively enhancing the performance stability and user experience of the air fryer.

In an optional embodiment, the guiding groove is a structure that gradually decreases in width from the bottom wall towards the opening direction, when the seasoning box is installed in the installation slot, at least part of the outer wall of the guiding part is in contact with the corresponding inner wall of the guiding groove. By setting the guiding groove to be a structure that gradually decreases in width from the bottom wall towards the opening direction, users can more easily align the opening of the guiding groove with the guiding part when installing the seasoning box, thereby reducing the difficulty of installing the seasoning box and enhancing user convenience.

In an optional embodiment, one end of the guiding part and the guiding groove corresponding to the opening has an inclined guiding surface, and the cross-sectional area of the guiding surface is smaller than the cross-sectional area of the opening of the guiding groove, when the seasoning box is installed in the installation slot, at least part of the outer wall of the guiding part is in contact with the corresponding inner wall of the guiding groove, the guiding surface is suitable for playing a guiding role. By providing the guiding surface at one end of the guiding part corresponding to the opening of the guiding groove, the guiding part can better slide into the guiding groove, thereby cooperating with the guiding groove, and effectively reducing the difficulty of installing the seasoning box and enhancing the user experience.

In an optional embodiment, the distance between the top of the guiding part or the guiding groove and the top of the side wall of the installation slot is L, and satisfies L>0. By setting a gap between the top of the guiding part or the guiding groove and the top of the side wall of the installation slot, users can install the seasoning box by placing the bottom of the seasoning box into the installation slot, using the side wall of the installation slot to position and guide the seasoning box, thereby facilitating the alignment of the guiding part with the opening of the guiding groove, effectively reducing the difficulty of installing the seasoning box, and enhancing user convenience.

In an optional embodiment, the inner cavity including a first inner cavity and a second inner cavity, the first feeding mechanism and the second feeding mechanism are suitable for being connected to the cooking cavity and the first inner cavity and the second inner cavity, respectively, the air fryer can achieve adding oil and/or water to the food in the cooking cavity by setting the first inner cavity and the second inner cavity in the seasoning box and setting the first feeding mechanism and the second feeding mechanism connected to the cooking cavity and the first inner cavity and the second inner cavity in the body, which can effectively improve the versatility and applicability of the air fryer, at the same time, by setting the first sealing member and the second sealing member at the first outlet and the second outlet and setting the first plunger and the second plunger in the first slot and the second slot, the first plunger and the second plunger can be used to push open the first sealing member and the second sealing member when the seasoning box is installed in the installation slot, thereby supplying oil and/or water normally. When the seasoning box is removed, the first plunger and the second plunger are separated from the first plug and the second plug, which can make the first sealing member and the second sealing member move downward, thereby closing the first outlet and the second outlet, avoiding the situation where the liquid in the seasoning box continues to flow out and pollutes the external environment after the seasoning box is removed, effectively enhancing the user experience. In addition, by setting the first slot and the second slot on both sides of the seasoning box and the installation slot, the installation of the seasoning box can be guided, which can effectively reduce the difficulty of plugging the first plug and the second plug into the first slot and the second slot when installing the seasoning box, avoid the situation where the oil and/or water supply is not normal due to improper plugging, effectively ensure the performance stability of the air fryer, and make the first plunger and the second plunger more smoothly extend into the first plug and the second plug, thereby driving the first sealing member and the second sealing member to move upward and opening the first outlet and the second outlet, reducing the situation where the first plunger and the second plunger are misaligned, jammed, or damaged when cooperating with the first plug and the second plug, effectively enhancing the performance stability of the air fryer.

In an optional embodiment, the body has a detachable seasoning box with an inner cavity, and the inner cavity including a first inner cavity and a second inner cavity, the body has a feeding mechanism, the feeding mechanism including a first feeding mechanism and a second feeding mechanism respectively connected to the cooking cavity and the first inner cavity and the second inner cavity, the second feeding mechanism including a second pump, an oil spray nozzle extending into the cooking cavity, and an oil pipeline connecting the second inner cavity and the second pump and the oil spray nozzle, the oil pipeline including a first oil pipeline, and both ends of the first oil pipeline have threaded connecting heads, the first oil pipeline is suitable for threading connection with the second pump and the oil spray nozzle. The air fryer can achieve adding water and/or oil to the food in the cooking cavity by setting the first inner cavity and the second inner cavity in the seasoning box and setting the first feeding mechanism and the second feeding mechanism connected to the cooking cavity and the first inner cavity and the second inner cavity in the body, which can effectively improve the versatility and applicability of the air fryer and enhance user convenience and user experience. At the same time, since the pressure required for atomizing oil is relatively high, by setting the threaded connecting heads at both ends of the first oil pipeline for threading connection with the second pump and the oil spray nozzle, the connection strength and stability between the first oil pipeline and the second pump and the oil spray nozzle can be effectively ensured, avoiding the situation where the first oil pipeline is disconnected from the second pump and the oil spray nozzle due to excessive internal pressure of the first oil pipeline, effectively enhancing the performance stability of the second feeding mechanism and the safety of use of the air fryer.

In an optional embodiment, the oil spray nozzle has an annular flange extending outwardly, and one side of the annular flange has a connecting piece that can be removably mounted on the oil spray nozzle, the top of the cooking cavity has an air duct plate, and the air duct plate has a oil spray hole, the oil spray nozzle is suitable for extending into the cooking cavity through the oil spray hole, and the connecting piece and the annular flange are suitable for being located on both sides of the oil spray hole, in contact with both sides of the air duct plate where the oil spray hole is located, the inner side of the connecting piece has a first internal thread, and the outer side of the oil spray nozzle has a first external thread that matches the first internal thread, the connecting piece is suitable for threading connection to the oil spray nozzle, the oil spray nozzle including an installation seat with an annular flange on the outer side and a nozzle body, the installation seat has a receiving groove connected to the oil pipeline, and the inner wall of the receiving groove has a second internal thread, one end of the nozzle body has a connecting part that can be inserted into the receiving groove, and the outer side of the connecting part has a second external thread that matches the second internal thread, the connecting part of the nozzle body is suitable for threading connection to the receiving groove of the installation seat, the nozzle body has a nozzle cap sleeved on the outer side, and the inner side of the nozzle cap has a third internal thread, the outer side of the nozzle body has a third external thread that matches the third internal thread, the nozzle cap is suitable for threading connection to the nozzle body. By threading the connecting piece to the oil spray nozzle and using the connecting piece to fix the oil spray nozzle to the air duct plate, not only can the connection strength and stability between the connecting piece and the oil spray nozzle be ensured, but also the connection strength and stability between the oil spray nozzle and the air duct plate can be ensured, avoiding the situation where the oil spray nozzle deviates or falls off from the oil spray hole due to the kinetic energy generated during the oil spraying of the oil spray nozzle, effectively ensuring the stability of the oil spray nozzle and enhancing the oil supplement effect and cooking effect of the air fryer. At the same time, by threading the nozzle body to the installation seat and threading the nozzle cap to the nozzle body, the structure of the oil spray nozzle can be effectively simplified, the production cost and user cost of the air fryer can be reduced, and the difficulty of disassembling, cleaning, and replacing the nozzle body and the nozzle cap can be effectively reduced, enhancing user convenience.

In an optional embodiment, the first feeding mechanism including a first pump, a water spray nozzle extending into the cooking cavity, and a water pipeline connecting the first inner cavity and the first pump and the water spray nozzle, the water pipeline including a first water pipeline, and both ends of the first water pipeline have fasteners that can be tightened, both ends of the first water pipeline are inserted into the first pump and the water spray nozzle and are fixedly connected to the first pump and the water spray nozzle by the fasteners. By inserting both ends of the first water pipeline into the first pump and the water spray nozzle and fixing them with the fasteners, the structure of the first feeding mechanism can be effectively simplified, the difficulty of disassembling and installing the first water pipeline can be reduced, and the connection strength between the first water pipeline and the first pump and the water spray nozzle can be ensured, effectively enhancing the water feeding stability of the first feeding mechanism and the performance stability of the air fryer.

In an optional embodiment, the top of the body has an installation slot with an open top, the installation slot has a detachable seasoning box with an inner cavity, the inner cavity including a first inner cavity and a second inner cavity, the body has an installation cavity, and the installation cavity has a feeding mechanism connected to the cooking cavity and the first inner cavity and the second inner cavity, the feeding mechanism including a first pump and a second pump respectively connected to the first inner cavity and the second inner cavity, the body has a heat dissipation air duct connected to the installation cavity, and the heat dissipation air duct has a heat dissipation component for generating a cooling airflow, the body has a first air inlet connected to the installation cavity and the atmosphere near the first pump and a second air inlet connected to the installation cavity and the atmosphere near the second pump. The air fryer can achieve heat dissipation of the feeding mechanism in the installation cavity by using the cooling airflow in the heat dissipation air duct, effectively enhancing the heat dissipation effect. At the same time, by setting the first air inlet and the second air inlet on the body and setting them near the first pump and the second pump, respectively, the external cold air can enter the installation cavity through the first air inlet and the second air inlet, thereby dissipating heat for the first pump and the second pump in the installation cavity. It can also make the external cold air quickly contact the first pump and the second pump after entering the installation cavity through the first air inlet and the second air inlet, thereby dissipating heat for the first pump and the second pump, effectively enhancing the heat dissipation effect and improving the user experience.

In an optional embodiment, the installation cavity has a control system electrically connected to the feeding mechanism, and the first pump and the second pump are respectively located on both sides of the control system, the rear side of the control system has a drive system electrically connected to the control system and extended rearward to drive the heat dissipation component, the body has a third air inlet near the drive system. By setting the first pump and the second pump on both sides of the control system, the interference between the first pump and the second pump during operation can be avoided, effectively enhancing the performance stability of the air fryer. At the same time, by setting the first pump and the second pump on both sides of the control system, the external cold air entering the installation cavity through the first air inlet and the second air inlet can dissipate heat for the first pump and the second pump, effectively enhancing the heat dissipation effect, and avoiding the accumulation of heat when the first pump and the second pump operate, ensuring the performance stability of the first pump and the second pump. In addition, by setting the third air inlet on the body and setting it near the drive system, the external cold air can enter the installation cavity through the third air inlet, thereby dissipating heat for the drive system in the installation cavity, and the external cold air can quickly contact the drive system after entering the installation cavity through the third air inlet, thereby dissipating heat for the drive system, effectively enhancing the heat dissipation effect.

In an optional embodiment, the top of the side wall of the installation slot has a recess for fingers to hold the seasoning box, and the inner wall of the recess is a round arc-shaped guiding structure extending from the top of the side wall of the installation slot towards the bottom of the seasoning box. The installation cavity has a control system electrically connected to the feeding mechanism, and the recess has a fourth air inlet connected to the installation cavity. The fourth air inlet is suitable for being set near the control system, and the inner side of the fourth air inlet has a water-blocking rib, which is suitable for covering at least part of the fourth air inlet. By setting the recess on the top of the side wall of the installation slot, the user can conveniently install and remove the seasoning box, effectively enhancing the convenience of use of the air fryer. At the same time, by setting the fourth air inlet on the body and setting it near the control system, the external cold air can enter the installation cavity through the fourth air inlet, thereby dissipating heat for the control system in the installation cavity, and the external cold air can quickly contact the control system after entering the installation cavity through the fourth air inlet, thereby dissipating heat for the control system, effectively enhancing the heat dissipation effect. In addition, by setting the water-blocking rib on the inner side of the fourth air inlet, the external liquid can be prevented from entering the installation cavity through the fourth air inlet, thereby causing damage to the control system, the drive system, etc., in the installation cavity, effectively enhancing the performance stability and safety of use of the air fryer.

Compared with the prior art, the beneficial effects of the present disclosure are as follows:
In the present disclosure, by setting multiple seasoning boxes on the body, the air fryer can achieve adding water, oil, and other seasonings to the food in the cooking cavity, which can not only greatly enrich the taste and texture of the food but also effectively improve the cooking effect of the food and enhance the user experience. At the same time, by setting the installation slot on the top of the body to install the seasoning box and setting the recess for fingers on the top of the side wall of the installation slot, users can insert their fingers into the recess to hold the seasoning box, thereby better installing and removing the seasoning box, effectively reducing the difficulty of installing and removing the seasoning box, and also reducing the difficulty of adding and replacing oil and/or water in the seasoning box, effectively enhancing user convenience and user experience. In addition, by setting the guiding part and the guiding groove on both sides of the installation slot and the seasoning box, not only can the installation of the seasoning box be guided, effectively reducing the difficulty of installing the seasoning box and enhancing the convenience of adding oil and/or water to the seasoning box, but also the positioning of the seasoning box can be realized, reducing the situation where the seasoning box is damaged due to sliding and falling, effectively enhancing the performance stability and user experience of the air fryer.

In order to make the purpose, technical solution, and advantages of the implementation examples of this disclosure clearer, the technical solution of this disclosure will be described clearly and completely in conjunction with the drawings of the implementation examples. Obviously, the described implementation examples are only part of the implementation examples of this disclosure, not all of them. The components of the implementation examples described and shown in the drawings here can be arranged and designed in various configurations.

Thus, the following detailed description of the embodiments of the present disclosure provided in the accompanying drawings is not intended to limit the scope of the present disclosure, but is merely representative of selected embodiments of the present disclosure. Based on the embodiments in the present disclosure, all other embodiments obtained by those of ordinary skill in the art without making inventive steps belong to the scope of protection of the present disclosure.

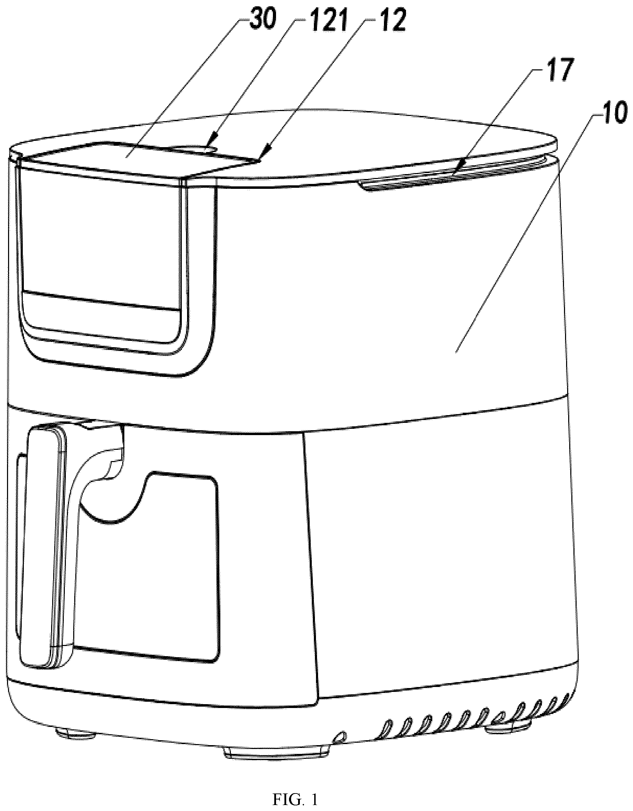

FIGS. 1 to 9 shown in the drawings are schematic diagrams of an air fryer with good cooking performance provided by this application. The air fryer including a body 10, a cooking cavity 11 located inside the body 10, and a hot air circulation system 20 connected to the cooking cavity 11. The hot air circulation system 20 is suitable for generating a circulating hot airflow and introducing it into the cooking cavity 11 to heat the food in the cooking cavity 11.

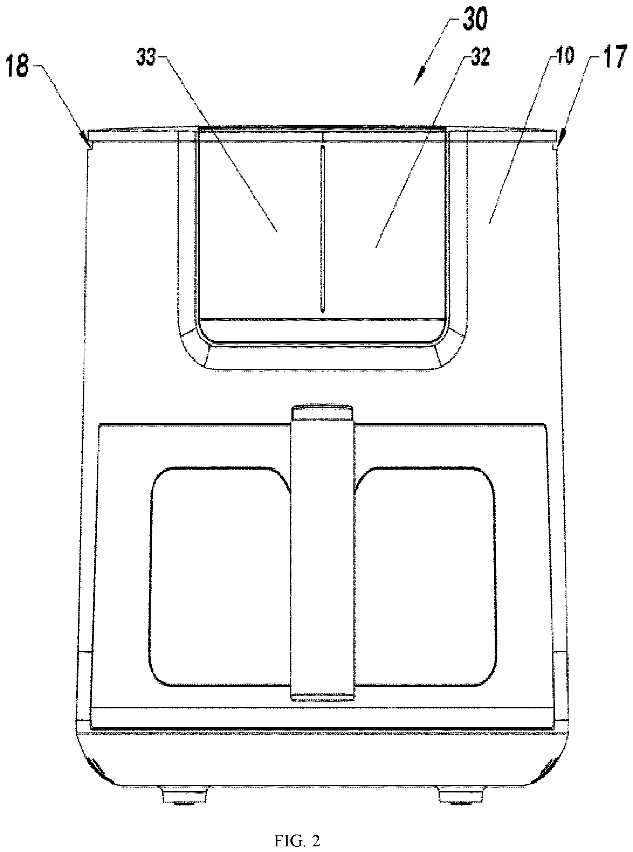

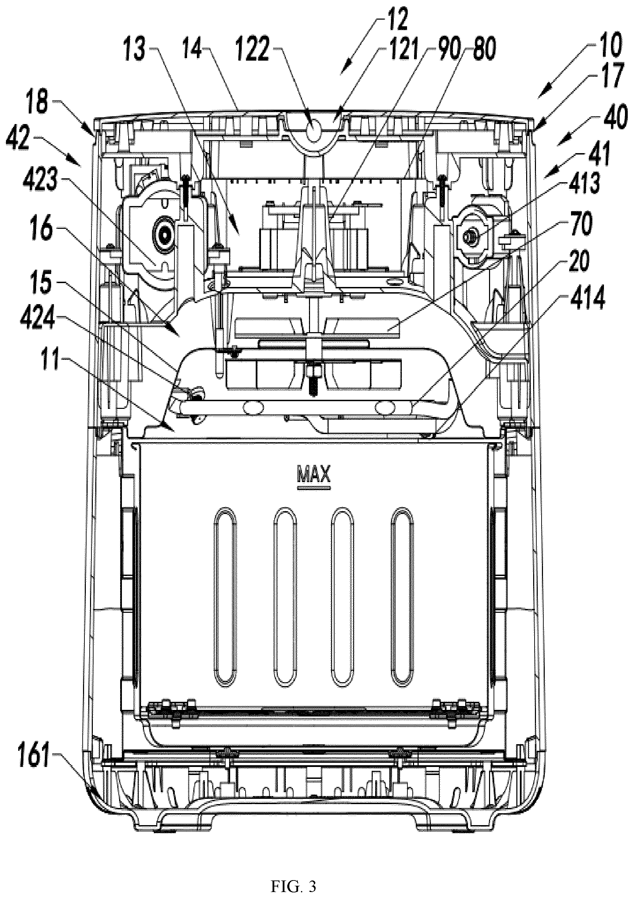

As shown in FIGS. 1 and 2, the body 10 has multiple seasoning boxes 30 on the outside, and the seasoning box 30 has an inner cavity 31 inside, which is suitable for storing water, oil, and other seasonings. As shown in FIGS. 2 and 3, there are multiple feeding mechanisms 40 corresponding to the seasoning box 30 inside the body 10, and one end of the multiple feeding mechanisms 40 is connected to the corresponding seasoning box 30, and the other end is connected to the cooking cavity 11. This application can achieve adding water, oil, and other seasonings to the food in the cooking cavity 11 by setting multiple seasoning boxes 30 on the body 10, which can not only greatly enrich the taste and texture of the food but also effectively improve the cooking effect of the food and enhance the user experience.

As shown in FIGS. 2 and 3, the seasoning box 30 further including a first seasoning box 32 and a second seasoning box 33, and the first inner cavity 311 and the second inner cavity 312 are suitable for being respectively located inside the first seasoning box 32 and the second seasoning box 33. The feeding mechanism 40 including a first feeding mechanism 41 and a second feeding mechanism 42, and one end of the first feeding mechanism 41 and the second feeding mechanism 42 is connected to the cooking cavity 11, and the other end is respectively connected to the first inner cavity 311 and the second inner cavity 312 of the first seasoning box 32 and the second seasoning box 33. The first seasoning box 32 and the second seasoning box 33 are suitable for being arranged in parallel and detachably on the top of the body 10. By arranging the first seasoning box 32 and the second seasoning box 33 in parallel on the top of the body 10, not only is it convenient for the user to observe the seasoning box 30, but it is also conducive to adding and replacing seasonings, effectively enhancing the practicality of the product. At the same time, by detachably mounting the first seasoning box 32 and the second seasoning box 33 on the top of the body 10, it is also convenient to take down the first seasoning box 32 and the second seasoning box 33 for cleaning and adding seasonings, further enhancing the practicality of the product.

As shown in FIGS. 1 and 2, in an optional implementation, the first seasoning box 32 and the second seasoning box 33 are preferably integrated into a one-piece structure. By designing the first seasoning box 32 and the second seasoning box 33 as an integrated structure, the product structure can be simplified, and the production cost can be reduced. In addition, there is a visual area on the side wall of the first seasoning box 32 and the second seasoning box 33. By setting the visual area on the side wall of the first seasoning box 32 and the second seasoning box 33, users can observe the remaining amount of seasonings in the first seasoning box 32 and the second seasoning box 33 in time, so as to add seasonings in time.

In an optional implementation, the visual area has capacity scale lines corresponding to the first seasoning box 32 and the second seasoning box 33. By setting the capacity scale lines corresponding to the first seasoning box 32 and the second seasoning box 33 in the visual area, users can understand the amount of added seasonings, thereby achieving better auxiliary cooking and better cooking results.

As shown in FIGS. 1, 2, and 4, in an optional implementation, one side of the body 10 has an open mouth connected to the cooking cavity 11, and the open mouth has a drawer-type food basket that can be inserted into the cooking cavity 11. The food can be cooked by placing the food into the cooking cavity 11 through the open mouth. In addition, in another optional implementation, the open mouth has a flip door component, and the open mouth can be opened and closed by flipping the door component. When the door component is flipped to open the open mouth, the food can be placed into the cooking cavity 11, and when the door component is flipped to close the open mouth, the food in the cooking cavity 11 can be cooked by the circulating hot airflow generated by the air frying system 20.

As shown in FIGS. 1 and 3, in the air fryer, the seasoning box 30 is preferably located above the open mouth on the body 10. By setting the seasoning box 30 above the open mouth of the cooking cavity 11, that is, on the front of the air fryer, users can more conveniently understand the state of the seasonings in the seasoning box 30, thereby enhancing the user experience and practicality of the product.

In an optional implementation, the seasoning box 30 including at least one oil box for holding oil and at least one water box for holding water. The water box can add water to the cooking cavity 11 to increase the water content in the food and avoid the dry taste of the food; the oil box can add oil to the cooking cavity 11 to make the food taste more crispy, thereby achieving better cooking results.

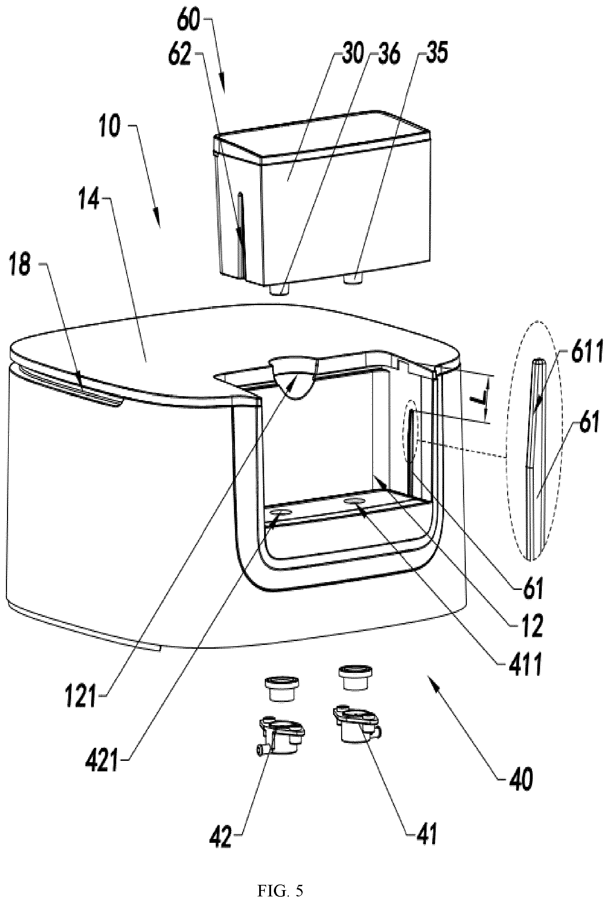

As shown in FIGS. 5 to 7, the front side top of the body 10 has an installation slot 12 with an open top, and the installation slot 12 has a detachable seasoning box 30 inside. The side wall top of the installation slot 12 has a recess 121 for fingers to reach in, and the recess 121 is opposite the side wall of the seasoning box 30. The air fryer can achieve installing and removing the seasoning box 30 by setting the recess 121 on the side wall top of the installation slot 12 for fingers to reach in and hold the seasoning box 30, effectively reducing the difficulty of installing and removing the seasoning box 30, and also reducing the difficulty of adding and replacing oil and/or water in the box 30, effectively enhancing user convenience and user experience.

As shown in FIGS. 5 to 7, in an optional implementation, the inner wall of the recess 121 is an arc-shaped surface structure extending towards the inside of the installation slot 12. By setting the recess 121 as an arc-shaped surface structure extending towards the inside of the installation slot 12, not only can it facilitate the user's fingers to hold the seasoning box 30, effectively enhancing the convenience of use of the seasoning box 30, but it can also avoid the residual liquid formed during the disassembly and installation of the seasoning box 30 accumulating in the recess 121, thereby affecting the user experience.

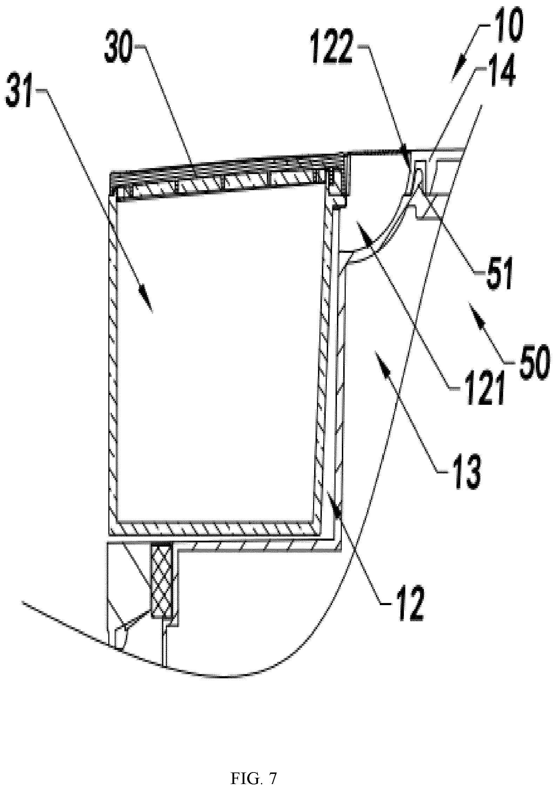

As shown in FIGS. 5 and 7, in an optional implementation, the front side of the installation slot 12 has a front opening corresponding to the front side wall of the seasoning box 30, and the rear side top of the installation slot 12 has a recess 121, which is suitable for being located in the middle of the rear side wall of the installation slot 12. The air fryer can achieve installing and removing the seasoning box 30 by setting the front opening corresponding to the front side wall of the seasoning box 30 on the front side of the installation slot 12, effectively enhancing the convenience of use of the seasoning box 30; at the same time, by setting the recess 121 in the middle of the rear side wall of the installation slot 12, it not only effectively enhances the overall aesthetics of the air fryer but also facilitates the user to hold and operate the seasoning box 30, effectively enhancing the convenience of use of the seasoning box 30 and user experience.

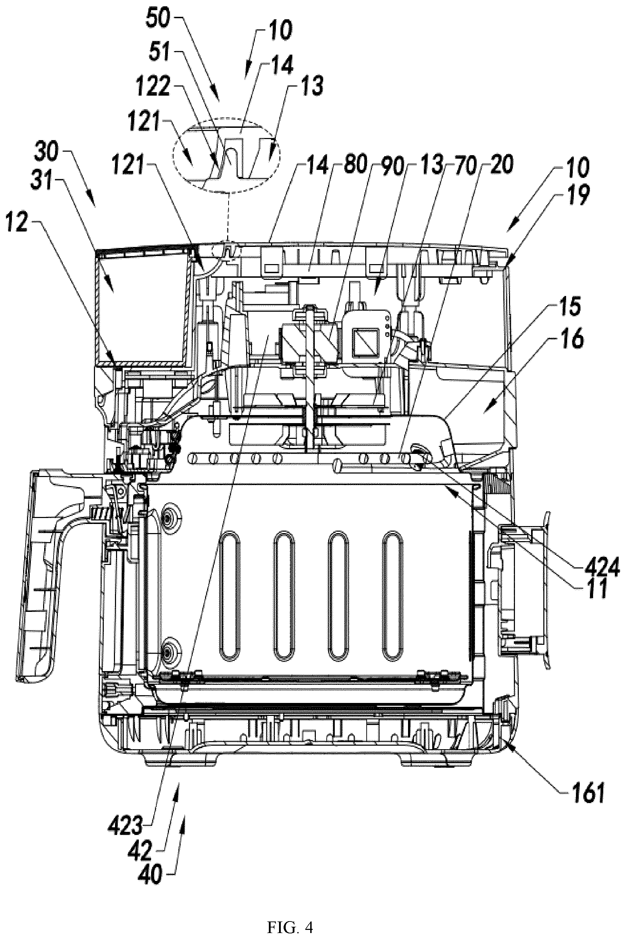

As shown in FIGS. 4 and 7, the installation cavity 13 is located inside the body 10 at the rear side of the installation slot 12, and the installation cavity 13 has electrical components inside. The top of the body 10 has a top cover 14 covering the installation cavity 13, and the connection between the top cover 14 and the side wall of the installation slot 12 has a water-blocking structure 50. The seasoning box 30 is easy to produce residual liquid during installation and removal, and residual liquid is also easy to adhere to the outer wall of the seasoning box 30. Therefore, by setting the water-blocking structure 50 at the connection between the top cover 14 and the side wall of the installation slot 12, not only can the residual liquid produced by the seasoning box 30 be blocked, but the residual liquid adhered to the outer wall of the seasoning box 30 can also be blocked, avoiding the residual liquid flowing into the installation cavity 13 through the connection gap between the top cover 14 and the side wall of the installation slot 12, thereby causing damage to the electrical components in the installation cavity 13 and effectively enhancing the performance stability and safety of use of the air fryer.

Specifically, the water-blocking structure 50 is suitable for being set around the open top edge of the installation slot 12. By setting the water-blocking structure 50 around the open top edge of the installation slot, the residual liquid formed during the disassembly and installation of the seasoning box 30 can be effectively prevented from flowing into the installation cavity 13 through the connection gap between the top cover 14 and the side wall of the installation slot 12, thereby causing damage to the electrical components in the installation cavity 13. It can effectively enhance the performance stability and safety of use of the air fryer. At the same time, the water-blocking structure 50 is also suitable for being set around the recess 121. Since the recess 121 is an arc-shaped surface structure extending towards the inside of the installation slot 12, the liquid easily flows into the recess 121 and then flows into the installation cavity 13 from the connection gap between the inner wall of the recess 121 and the top cover 14. Therefore, by setting the water-blocking structure 50 around the top edge of the recess 121, not only can the water-blocking effect of the water-blocking structure 50 be effectively enhanced, but also the performance stability and safety of use of the air fryer can be effectively enhanced, and the user experience can be improved.

As shown in FIGS. 4 and 7, the water-blocking structure 50 including a water-blocking rib 51, which is suitable for being located on the inner side of the top cover 14 and is formed by extending upward from the outer edge of the open top of the installation slot 12. By setting the water-blocking rib 51 on the inner side of the top cover 14 and forming it by extending upward from the outer edge of the open top of the installation slot 12, not only can the water-blocking rib 51 be hidden to enhance the overall aesthetics of the air fryer, but also the structure of the air fryer can be simplified, the production cost and usage cost can be reduced, and the user experience can be improved.

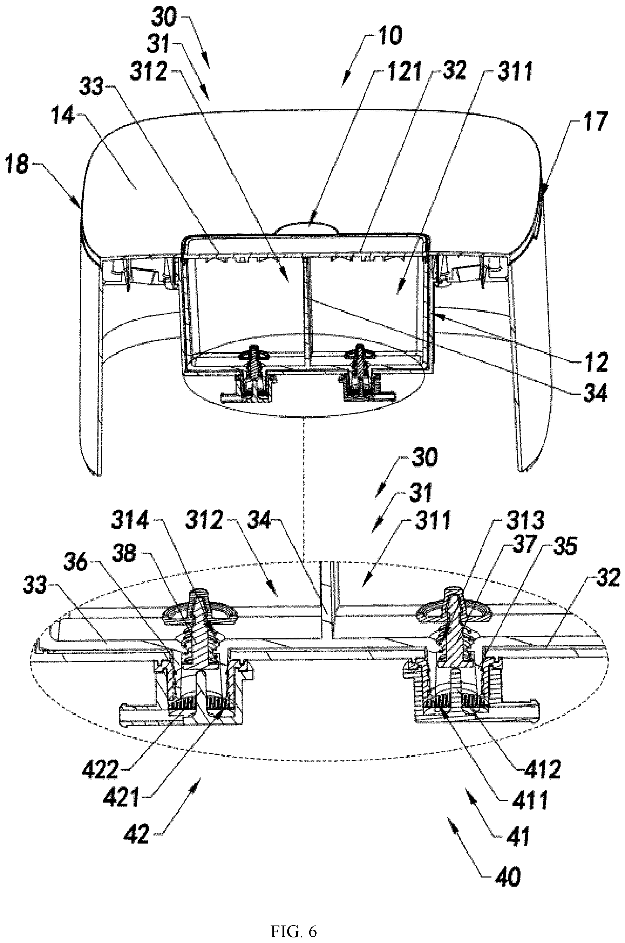

As shown in FIGS. 3 and 6, in an optional implementation, the inner cavity 31 including a first inner cavity 311 and a second inner cavity 312, and the first feeding mechanism 41 and the second feeding mechanism 42 are suitable for being respectively connected to the cooking cavity 11 and the first inner cavity 311 and the second inner cavity 312. The air fryer can achieve adding oil and/or water to the food in the cooking cavity 11 by setting the first inner cavity 311 and the second inner cavity 312 in the seasoning box 30 and setting the first feeding mechanism 41 and the second feeding mechanism 42 respectively connected to the cooking cavity 11 and the first inner cavity 311 and the second inner cavity 312 in the body 10. It can not only effectively simplify the operation of adding water and/or oil of the traditional air fryer and enhance user convenience but also effectively enhance the applicability and functional diversity of the air fryer. As shown in FIGS. 6, in an optional implementation, a partition plate 34 is vertically arranged in the seasoning box 30 to separate the first inner cavity 311 and the second inner cavity 312. The projection part of the partition plate 34 on the side wall of the installation slot 12 is located in the recess 121. By setting the partition plate 34 that extends vertically and corresponds to the recess 121 in the seasoning box 30, not only can the first inner cavity 311 and the second inner cavity 312 be separated, but the performance stability and structural strength of the seasoning box 30 can also be effectively enhanced, reducing the situation where the seasoning box 30 deforms or is damaged when users hold the seasoning box 30.

As shown in FIGS. 6, the partition plate 34 is suitable for being integrally formed with the inner wall of the inner cavity 31. By integrally forming the partition plate 34 with the inner wall of the inner cavity 31, not only can the first inner cavity 311 and the second inner cavity 312 be well separated to avoid the liquid in the first inner cavity 311 and the second inner cavity 312 from contaminating each other, but also the structure of the seasoning box 30 can be effectively simplified, the production cost and usage cost can be reduced, and the user experience can be enhanced.

As shown in FIGS. 3 and 5, in an optional implementation, the front side of the installation slot 12 has a front opening, and the front side of the seasoning box 30 is visible at least in part at the position corresponding to the front opening of the installation slot 12. By setting the front opening on the front side of the installation slot 12 and making the front side of the seasoning box 30 visible at the position corresponding to the front opening of the installation slot 12, not only can the installation and removal of the seasoning box 30 be facilitated, effectively enhancing the convenience of adding oil and/or water to the seasoning box 30, but also the user can conveniently check the usage status of the oil and/or water in the seasoning box 30, so as to replace or add in time, reducing the situation where the cooking effect is affected due to insufficient water supply or oil supply, effectively enhancing the convenience of use and performance stability of the air fryer.

As shown in FIGS. 7, the bottom wall of the installation slot 12 is suitable for being a sloping surface structure that inclines from the rear side to the front side opening direction. The residual water produced by the seasoning box 30 during installation and removal, as well as the residual water adhered to the outer wall of the seasoning box 30, can easily flow into the installation slot 12, forming accumulated liquid. Therefore, by setting the bottom wall of the installation slot 12 as a sloping surface structure that inclines from the rear side to the front side opening direction, not only can the accumulated liquid in the installation slot 12 be well discharged, reducing the situation where the accumulated liquid in the installation slot 12 is brought out when the seasoning box 30 is removed, thereby polluting the external environment, but also the accumulation of residual liquid in the installation slot 12 can be avoided, thereby affecting the hygiene of cooking and effectively enhancing the user experience.

As shown in FIGS. 7, the front side opening of the installation slot 12 is the outer shell of the body 10, and a sealing member is provided at the connection between the inner wall of the installation slot 12 and the outer shell of the body 10. The inner wall of the installation slot 12 is suitable for being in contact with the outer shell of the body 10 through the sealing member. By providing a sealing member at the connection between the inner wall of the installation slot 12 and the outer shell of the body 10, a sealed connection between the outer shell of the body 10 and the inner wall of the installation slot 12 can be achieved, avoiding the liquid in the installation slot 12 from flowing into the body 10 through the connection gap between the outer shell of the body 10 and the inner wall of the installation slot 12, thereby causing damage to the electrical components in the body 10 and effectively enhancing the safety and performance stability of the air fryer.

As shown in FIGS. 5, a guiding structure 60 is provided on the side walls of the seasoning box 30 and the installation slot 12. The guiding structure 60 including a guiding part 61 that extends vertically and protrudes from the left and right side walls of the installation slot 12 and a guiding groove 62 that matches the guiding part 61 and is provided on the left and right side walls of the seasoning box 30. When the opening of the guiding groove 62 is aligned with the guiding part 61, the seasoning box 30 can be moved towards the bottom of the installation slot 12, thereby achieving the installation of the seasoning box 30. By detachably mounting the seasoning box 30 in the installation slot 12, users can conveniently disassemble the seasoning box 30 for adding oil and/or water to better cook food. At the same time, by providing the guiding part 61 and the guiding groove 62 on both side walls of the installation slot 12 and the seasoning box 30, not only can the installation of the seasoning box 30 be guided, effectively reducing the difficulty of installing the seasoning box 30 and enhancing the convenience of adding oil and/or water to the seasoning box 30, but also the positioning of the seasoning box 30 can be achieved, reducing the situation where the seasoning box 30 is damaged due to sliding and falling, effectively enhancing the performance stability and user experience of the air fryer. In addition, in another optional implementation, the guiding part 61 is also suitable for being provided on the left and right side walls of the seasoning box 30, and the guiding groove 62 is suitable for being provided on the left and right side walls of the installation slot 12. By providing the guiding part 61 and the guiding groove 62 on the left and right side walls of the seasoning box 30 and the installation slot 12, the same effects as mentioned above can be achieved.

As shown in FIGS. 5, in an optional implementation, the guiding groove 62 is suitable for being a structure that gradually decreases in width from the bottom wall towards the opening direction.

When the seasoning box 30 is installed in the installation slot 12, at least part of the outer wall of the guiding part 61 is in contact with the corresponding inner wall of the guiding groove 62. By setting the guiding groove 62 to be a structure that gradually decreases in width from the bottom wall towards the opening direction, users can more easily align the opening of the guiding groove 62 with the guiding part 61 when installing the seasoning box 30, thereby reducing the difficulty of installing the seasoning box 30 and enhancing user convenience.

As shown in FIGS. 5, in an optional implementation, one end of the guiding part 61 and the guiding groove 62 corresponding to the opening is provided with an inclined guiding surface 611, and the cross-sectional area of the guiding surface 611 is smaller than the cross-sectional area of the opening of the guiding groove 62. When the seasoning box 30 is installed in the installation slot 12, at least part of the outer wall of the guiding part 61 is in contact with the corresponding inner wall of the guiding groove 62. The guiding surface 611 is suitable for playing a guiding role. By providing the guiding surface 611 at one end of the guiding part 61 corresponding to the opening of the guiding groove 62, the guiding part 61 can better slide into the guiding groove62, thereby cooperating with the guiding groove 62, and effectively reducing the difficulty of installing the seasoning box 30 and enhancing the user experience.

As shown in FIGS. 5, in an optional implementation, when the guiding part 61 is provided on the left and right side walls of the installation slot 12, the distance between the top of the guiding part 61 and the top of the side wall of the installation slot 12 is L, and satisfy L>0. When L ≤ 0, such as when L is 0, the difficulty of aligning the guiding part 61 with the opening of the guiding groove 62 is relatively high, and the operation difficulty of installing the seasoning box 30 is high, resulting in poor user experience. When L is -1mm, -2mm, -3mm, etc., the guiding part 61 protrudes from the top plane of the side wall of the installation slot 12, and the overall aesthetics of the body 10 is relatively poor. Therefore, the distance L between the top of the guiding part 61 and the top of the side wall of the installation slot 12 is preferably greater than 0. When L is greater than 0, such as when L is 1mm, 2mm, 3mm, etc., there is a gap between the top of the guiding part 61 and the top of the side wall of the installation slot 12. By providing a gap between the top of the guiding part 61 or the guiding groove 62 and the top of the side wall of the installation slot 12, users can install the seasoning box 30 by placing the bottom of the seasoning box 30 into the installation slot 12, using the side wall of the installation slot 12 to position and guide the seasoning box 30, thereby facilitating the alignment of the guiding part 61 with the opening of the guiding groove 62, effectively reducing the difficulty of installing the seasoning box 30, and enhancing user convenience. In addition, in another optional implementation, when the guiding groove 62 is provided on the left and right side walls of the installation slot 12, the distance L between the top of the guiding groove 62 and the top of the side wall of the installation slot 12 is preferably greater than 0, which can achieve the same technical effects as mentioned above.

As shown in FIGS. 5, in an optional implementation, one of the guiding part 61 and the guiding groove 62 is suitable for being integrally formed with the side wall of the seasoning box 30, and the other is suitable for being integrally formed with the side wall of the installation slot 12. By integrally forming the guiding part 61 and the guiding groove 62 with the side wall of the seasoning box 30 and the side wall of the installation slot 12, the structure of the air fryer can be effectively simplified, the production cost and usage cost can be reduced, and the user experience can be enhanced.

As shown in FIGS. 5 and 6, in an optional implementation, there are a first plug 35 and a second plug 36 respectively connected to the first inner cavity 311 and the second inner cavity 312 below. The first feeding mechanism 41 and the second feeding mechanism 42 including a first slot 411 and a second slots 421 respectively corresponding to the first plug 35 and the second 36 and located at the bottom of the installation slot 12. When the guiding part 61 is aligned with the opening of the guiding groove 62 and the seasoning box 30 is moved towards the bottom of the installation slot 12, the first plug 35 and the second plug 36 are suitable for being detachably plugged into the first slot 411and the second slot 421. The air fryer can achieve adding oil or water to the food in the cooking cavity 11 by setting the first inner cavity 311 and the second inner cavity 312 in the seasoning box 30 and setting the first feeding mechanism 41 and the second feeding mechanism 42 respectively connected to the cooking cavity 11 and the first inner cavity 311 and the second inner cavity 312 in the body 10. It can not only effectively enhance the versatility and applicability of the air fryer but also effectively enhance the convenience of use and user experience. At the same time, by providing guiding parts 61 and guiding grooves 62 on both side walls of the seasoning box 30 and the installation slot 12, not only can the alignment of the first plug 35 and the second plug 36 with the first slots 411 and the second slot 421 be guided, effectively reducing the difficulty of installing the seasoning box 30, but also the situation where the plugs are not properly inserted, resulting in the inability to supply oil and/or water normally, can be avoided, effectively ensuring the performance stability of the air fryer.

As shown in FIGS. 6, in an optional implementation, there are first liquid outlet 313 and second liquid outlet 314 respectively communicating with the first plug 35 and the second plug 36 at the bottom of the first inner cavitie 311 and the second inner cavitie 312. The first liquid outlet 313 and the second liquid outlet 314 are respectively movably provided with the first blocking member 37 and the second blocking member 38 for closing the first liquid outlet 313 and the second liquid outlet 314. The first slot 411 and the second slot 421 are provided with the first plunger 412 and the second plunger 422 extending upward. When the guiding part 61 is aligned with the opening of the guiding groove 62 and the seasoning box 30 is moved towards the bottom of the installation slot 12 until the first plug 35 and the second plug 36 are detachably plugged into the first slot 411 and the second slot 421, the first plunger 412 and the second plunger 422 are suitable for extending into the first plug 35 and the second plugf 36 respectively to drive the first blocking member 37 and the second blocking member 38 to move upward, thereby opening the first liquid outlet 313 and the second liquid outlet 314. By providing the first blocking member 37 and the second blocking member 38 at the first liquid outlet 313 and the second liquid outlet 314 and providing the first plunger 412 and the second plunger 422 in the first slot 411 and second slot 421, it is possible to achieve normal oil and/or water supply by using the first plunger 412 and the second plunger 422 to push open the first blocking member 37 and the second blocking member 38 when the seasoning box 30 is installed in the installation slot 12. When the seasoning box 30 is removed, the first plunger 412 and the second plunger 422 are separated from the first plug 35 and the second plug 36 respectively, which can cause the first blocking member 37 and the second blocking member 38 to move downward, thereby closing the first liquid outlet 313 and the second liquid outlet 314, avoiding the situation where the liquid in the seasoning box 30 continues to flow out and pollutes the external environment after the seasoning box 30 is removed, effectively enhancing the user experience. At the same time, by providing guiding parts 61 and guiding grooves 62 on both side walls of the seasoning box 30 and the installation slot 12, the cooperation between the first plunger 412 and the second plunger 422 and the first plug 35 and the second plug 36 can be guided, which can not only effectively reduce the difficulty of installing the seasoning box 30, enabling the first plunger 412 and the second plunger 422 to more smoothly extend into the first plug 35 and the second plugf 36 to drive the first blocking member 37 and the second blocking member 38 to move upward, thereby opening the first liquid outlet 313 and the second liquid outlet 314, but also reduce the situation where the first plunger 412 and the second plunger 422 are misaligned, jammed, or damaged when cooperating with the first plug 35 and the second plug 36, effectively enhancing the performance stability of the air fryer.

As shown in FIGS. 2, 8, and 9, the second feeding mechanism 42 including a second pump 423, an oil spray nozzle 424 extending into the cooking cavity 11, and an oil pipeline 425 connecting the second inner cavity 312, the second pump 423, and the oil spray nozzle 424. The oil pipeline 425 including a first oil pipeline 4251 and a second oil pipeline. Both ends of the first oil pipeline 4251 are provided with threaded connecting heads 426. The first oil pipeline 4251 is suitable for being threadedly connected to the second pump 423 and the oil spray nozzle 424. Both ends of the second oil pipeline are suitable for being respectively connected to the second inner cavity 312 and the second pump 423. When the air fryer is working, since the second pump 423 needs to generate a relatively large pressure to press the oil in the second pump 423 into the first oil pipeline 4251 and spray it out through the oil spray nozzle 424, by providing threaded connecting heads 426 at both ends of the first oil pipeline 4251 for threaded connection with the second pump 423 and the oil spray nozzle 424, the connection strength and stability between the first oil pipeline 4251 and the second pump 423 and the oil spray nozzle 424 can be effectively ensured, avoiding the situation where the first oil pipeline 4251 is disconnected from the second pump 423 and the oil spray nozzle 424 due to excessive internal pressure of the first oil pipeline 4251, effectively enhancing the performance stability and safety of use of the second feeding mechanism 42 and the air fryer.

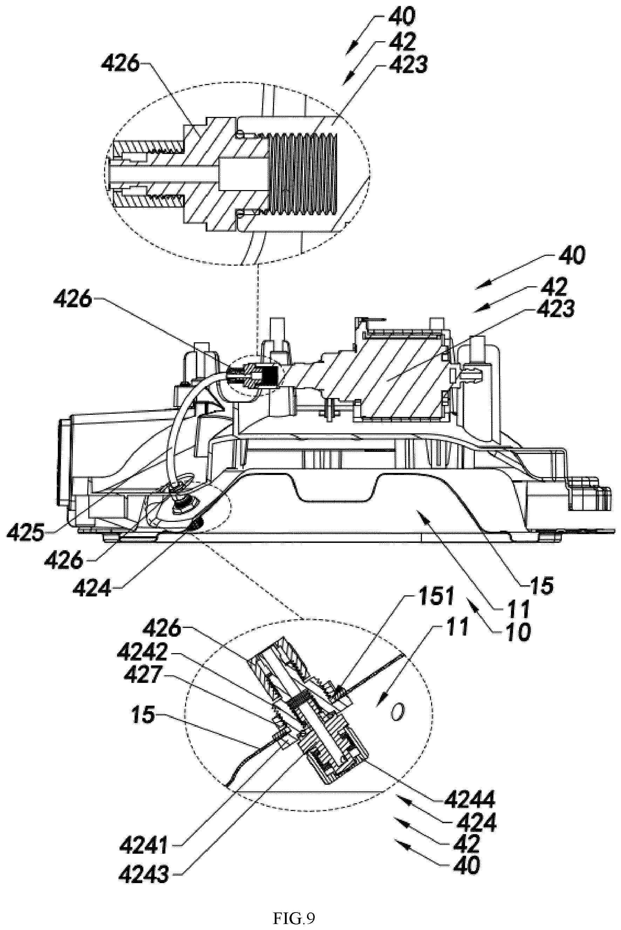

As shown in FIGS. 9, in an optional implementation, there is an annular flange 4241 extending outwardly on the outside of the oil spray nozzle 424, and a connecting piece 427 that can be removably mounted on one side of the annular flange 4241. The top of the cooking cavity 11 has an air duct plate 15, and the air duct plate 15 has an oil spray hole 151. The oil spray nozzle 424 is suitable for extending into the cooking cavity 11 through the oil spray hole 151, and the connecting piece 427 and the annular flange 4241 are suitable for being respectively located on both sides of the oil spray hole 151, in contact with both sides of the air duct plate 15 where the oil spray hole 151 is located. The air fryer can fix the oil spray nozzle 424 to the air duct plate 15 by using the connecting piece 427, which can avoid the oil spray nozzle 424 from deviating or falling off from the oil spray hole 151 due to the kinetic energy generated during the oil spraying of the oil spray nozzle 424, ensuring the stability of the oil spray nozzle 424 and effectively enhancing the oil supplement effect and cooking effect of the air fryer.

As shown in FIGS. 9, in an optional implementation, the connecting piece 427 has a first internal thread on the inside, and the oil spray nozzle 424 has a first external thread on the outside that matches the first internal thread. The connecting piece 427 is suitable for being threadedly connected to the oil spray nozzle 424. By threading the connecting piece 427 to the oil spray nozzle 424, not only can the connection strength and stability between the connecting piece 427 and the oil spray nozzle 424 be ensured, but also the connection strength and stability between the oil spray nozzle 424 and the air duct plate 15 can be ensured, effectively enhancing the performance stability of the air fryer.

As shown in FIGS. 9, in an optional implementation, the oil spray nozzle 424 including an installation seat 4242 with an annular flange 4241 on the outside and a nozzle body 4243. The installation seat 4242 has a receiving groove connected to the oil pipeline 425, and the inner wall of the receiving groove has a second internal thread. One end of the nozzle body 4243 has a connecting part that can be inserted into the receiving groove, and the outside of the connecting part has a second external thread that matches the second internal thread. The connecting part of the nozzle body 4243 is suitable for being threadedly connected to the receiving groove of the installation seat 4242. By threading the nozzle body 4243 to the installation seat 4242, not only can the structure of the oil spray nozzle 424 be effectively simplified, reducing the production cost and user cost of the air fryer, but also the difficulty of disassembling and installing the nozzle body 4243 can be effectively reduced, facilitating the disassembly, cleaning, and replacement of the nozzle body 4243. At the same time, the threaded connection between the nozzle body 4243 and the installation seat 4242 can also ensure the connection strength and stability between the nozzle body 4243 and the installation seat 4242, effectively enhancing the stability of the oil spray nozzle 424 and the performance stability of the air fryer.

As shown in FIGS. 9, in an optional implementation, the nozzle body 4243 has a nozzle cap 4244 sleeved on the outside. The inner side of the nozzle cap 4244 has a third internal thread, and the outside of the nozzle body 4243 has a third external thread that matches the third internal thread. The nozzle cap 4244 is suitable for being threadedly connected to the nozzle body 4243. By threading the nozzle cap 4244 to the nozzle body 4243, not only can the difficulty of disassembling and installing the nozzle cap 4244 be reduced, facilitating the disassembly, cleaning, and replacement of the nozzle cap 4244, but also the structure of the oil spray nozzle 424 can be effectively simplified, reducing the production cost and user cost of the air fryer.

In an optional implementation, the first oil pipeline 4251 is suitable for being made of high-pressure resistant metals or non-metal materials such as stainless steel, copper alloy, and PTFE. In the air fryer, since the pressure required for atomizing oil is relatively high, the first oil pipeline 4251 will generate relatively high pressure when the second feeding mechanism 42 is working. By using high-pressure resistant metals or non-metal materials to make the first oil pipeline 4251, the impact of high pressure inside the first oil pipeline 4251 on itself can be reduced, ensuring normal oil supply and effectively enhancing the oil supply stability of the second feeding mechanism 42.

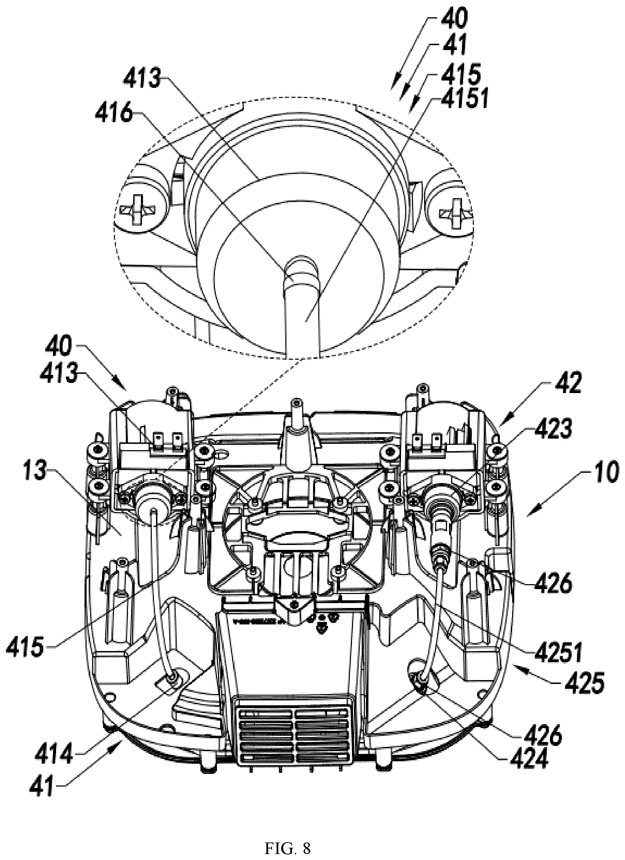

As shown in FIGS. 8, in an optional implementation, the first feeding mechanism 41 is suitable for including a first pump 413, a water spray nozzle 414 extending into the cooking cavity 11, and a water pipeline 415 connecting the first inner cavity 311, the first pump 413, and the water spray nozzle 414. The water pipeline 415 including a first water pipeline 4151 and a second water pipeline. Both ends of the first water pipeline 4151 are provided with fasteners 416 that can be tightened. Both ends of the first water pipeline 4151 are suitable for being respectively plugged into the first pump 413 and the water spray nozzle 414 and are fixedly connected to the first pump 413 and the water spray nozzle 414 by the fasteners 416. Both ends of the second water pipeline are suitable for being respectively connected to the first inner cavity 311 and the first pump 413. By plugging both ends of the first water pipeline 4151 into the first pump 413 and the water spray nozzle 414 and fixing them with the fasteners 416, not only can the structure of the first feeding mechanism 41 be effectively simplified and the difficulty of disassembling and installing the first water pipeline be reduced, but also the connection strength between the first water pipeline and the first pump 413 and the water spray nozzle 414 can be ensured, effectively enhancing the water supply stability of the first feeding mechanism 41 and the performance stability of the air fryer. As shown in FIGS. 3, the body 10 has a heat dissipation air duct 16 connected to the installation cavity 13, and the heat dissipation air duct 16 has a heat dissipation component 70 for generating a cooling airflow. The body 10 has a first air inlet 17 connected to the installation cavity 13 and the atmosphere near the first pump 413 and a second air inlet 18 connected to the installation cavity 13 and the atmosphere near the second pump 423. The air fryer can achieve heat dissipation of the feeding mechanism 40 in the installation cavity 13 by using the cooling airflow in the heat dissipation air duct 16, effectively enhancing the heat dissipation effect. At the same time, by setting the first air inlet 17 and the second air inlet 18 on the body 10 and setting them near the first pump 413 and the second pump 423 respectively, not only can the external cold air enter the installation cavity 13 through the first air inlet 17 and the second air inlet 18, thereby dissipating heat for the first pump 413 and the second pump 423 in the installation cavity 13, but also the external cold air can quickly contact the first pump 413 and the second pump 423 after entering the installation cavity 13 through the first air inlet 17 and the second air inlet 18, thereby dissipating heat for the first pump 413 and the second pump 423, effectively enhancing the heat dissipation effect and improving the user experience.

As shown in FIGS. 3, in an optional implementation, the installation cavity 13 has a control system 80 electrically connected to the feeding mechanism 40, and the first pump 413 and the second pump 423 are respectively located on both sides of the control system 80. By setting the first pump 413 and the second pump 423 on both sides of the control system 80, the interference between the first pump 413 and the second pump 423 during operation can be avoided, effectively enhancing the performance stability of the air fryer. At the same time, by setting the first pump 413 and the second pump 423 on both sides of the control system 80, not only can the external cold air entering the installation cavity 13 through the first air inlet 17 and the second air inlet 18 dissipate heat for the first pump 413 and the second pump 423, effectively enhancing the heat dissipation effect, but also the accumulation of heat when the first pump 413 and the second pump 423 operate can be avoided, ensuring the performance stability of the first pump 413 and the second pump 423.

As shown in FIGS. 4, in an optional implementation, the control system 80 has a drive system 90 electrically connected to the control system 80 and extended rearward to drive the heat dissipation component 70. The body 10 has a third air inlet 19 near the drive system 90. By setting the third air inlet 19 on the body 10 and setting it near the drive system90, not only can the external cold air enter the installation cavity 13 through the third air inlet 19, thereby dissipating heat for the drive system 90 in the installation cavity 13, but also the external cold air can quickly contact the drive system 90 after entering the installation cavity 13 through the third air inlet 19, thereby dissipating heat for the drive system 90, effectively enhancing the heat dissipation effect.

As shown in FIGS. 3, in an optional implementation, the first pump 413, the second pump 423, and the drive system 90 are spaced apart from the control system 80. By spacing the first pump 413, the second pump 423, and the drive system 90 apart from the control system 80, not only can the interference between the first pump 413, the second pump 423, the drive system 90, and the control system 80 during operation be avoided, but also the problem of heat accumulation during operation can be avoided, effectively enhancing the heat dissipation effect and performance stability of the air fryer.

As shown in FIGS. 1 to 3, in an optional implementation, the first air inlet 17 is a plurality of strip holes arranged side by side near the first pump 413, and the second air inlet 18 is also a plurality of strip holes arranged side by side near the second pump 423. By setting the first air inlet 17 and the second air inlet 18 as a plurality of strip holes arranged side by side, the air intake of the first air inlet 17 and the second air inlet 18 can be increased, effectively enhancing the heat dissipation effect of the first pump 413 and the second pump 423. In addition, in the air fryer, the shape of the first air inlet 17 and the second air inlet 18 is preferably not limited to strip shape; specifically, in another optional implementation, one of the first air inlet 17 and the second air inlet 18 is suitable for being a plurality of strip holes arranged side by side near the first pump 413 or the second pump 423, and the other is suitable for being a plurality of through holes arranged near the first pump 413 or the second pump 423, which can also achieve the aforementioned effect.

As shown in FIGS. 3 and 4, in an optional implementation, the recess 121 has a fourth air inlet 122 connected to the installation cavity 13, and the fourth air inlet 122 is suitable for being set near the control system 80. By setting the fourth air inlet 122 on the body 10 and setting it near the control system 80, not only can the external cold air enter the installation cavity 13 through the fourth air inlet 122, thereby dissipating heat for the control system 80 in the installation cavity 13, but also the external cold air can quickly contact the control system 80 after entering the installation cavity 13 through the fourth air inlet 122, thereby dissipating heat for the control system 80, effectively enhancing the heat dissipation effect.

As shown in FIGS. 4 and 7, in an optional implementation, the fourth air inlet 122 has a water-blocking rib 51 on the inner side, and the water-blocking rib 51 is suitable for covering at least part of the fourth air inlet 122. By setting the water-blocking rib 51 on the inner side of the fourth air inlet 122, the external liquid can be prevented from entering the installation cavity 13 through the fourth air inlet 122, thereby causing damage to the control system 80, the drive system 90, etc., in the installation cavity 13, effectively enhancing the performance stability and safety of use of the air fryer.

As shown in FIGS. 3 and 4, in an optional implementation, the heat dissipation air duct 16 is at least partially surrounded by the cooking cavity 11. By surrounding the cooking cavity 11 with the heat dissipation air duct 16, the outer wall of the cooking cavity 11 can be dissipated by the cooling airflow inside the heat dissipation air duct 16, reducing the transmission of high temperature inside the cooking cavity 11 to the outside, thereby affecting the normal operation of the electrical components outside the cooking cavity 11, effectively enhancing the performance stability and safety of use of the air fryer.

As shown in FIGS. 3 and 4, in an optional implementation, one end of the heat dissipation air duct 16 is connected to the installation cavity 13, and the other end has a fifth air inlet 161 connected to the atmosphere. The fifth air inlet 161 is suitable for being located at the bottom of the body 10, and there are a plurality of support feet extending downward around the fifth air inlet 161 at the bottom of the body 10. In the air fryer, the fifth air inlet 161 is suitable for discharging the cooling airflow inside the body 10. By setting the fifth air inlet 161 at the bottom of the body 10 and providing a plurality of support feet extending downward around the fifth air inlet 161 at the bottom of the body 10, not only can the fifth air inlet 161 be hidden to enhance the overall aesthetics of the air fryer, but also ensure that the bottom of the body 10 has enough space for air circulation to smoothly discharge the cooling airflow inside the body 10, effectively enhancing the cold airflow circulation efficiency and heat dissipation efficiency of the body 10. The above content is a further detailed explanation of this application in combination with specific preferred embodiments, and the purpose of this application has been fully and effectively achieved. Technicians in this field should understand that the embodiments shown and described in the description and drawings of this application are only exemplary and do not limit this application. For ordinary technicians in this field, there will be changes in specific implementations and application ranges without departing from this application. The content of this disclosure should not be understood as limiting the scope of this application.

It should be noted that the terms used here are only for describing specific embodiments and are not intended to limit the examples disclosed according to this disclosure. As used here, unless otherwise specified in the context, the singular form also intends to including the plural form. In addition, it should be understood that when the terms "comprising" and/or "including" are used in this specification, they indicate the presence of features, steps, operations, devices, components, and/or their combinations.

Unless otherwise specified, the relative arrangement of components and steps, numerical expressions, and values described in these embodiments do not limit the scope of this disclosure. At the same time, it should be understood that the known technologies, methods, and devices in the related field may not be discussed in detail, but they should be considered as part of the authorized specification when appropriate. In all examples shown and discussed here, any specific values should be interpreted as merely exemplary and not limiting. Therefore, other examples of exemplary embodiments can have different values. It should be noted that similar reference numbers and letters in the following drawings indicate similar items, so once an item is defined in one drawing, it does not need to be further discussed in subsequent drawings.

In the description of this disclosure, it should be understood that directional terms such as "front, back, up, down, left, right," "transverse, vertical, horizontal," and "top, bottom" indicate the direction or position relationship as shown in the drawings, only for the convenience of describing this disclosure and simplifying the description. Unless otherwise stated, these directional terms do not indicate and imply that the device or component referred to must have a specific direction or be constructed and operated in a specific direction, so they should not be understood as limiting the scope of protection of this disclosure. The directional terms "inner" and "outer" refer to the inside and outside relative to the outline of the respective components themselves.

For the convenience of description, spatial relative terms such as "on," "above," "on the upper surface," and "upper" can be used to describe the spatial position relationship between one device or feature and other devices or features as shown in the drawings. It should be understood that spatial relative terms are intended to including different orientations during use or operation in addition to the orientation of the device as described in the drawings. For example, if the device in the drawing is inverted, the device described as "above" or "on" other devices or structures will then be positioned as "below" or "under" other devices or structures. Therefore, the exemplary term "above" can include both "above" and "below" orientations. The device can also be positioned in other different ways (rotated 90 degrees or in other orientations), and the spatial relative description used here should be interpreted accordingly.

In addition, it should be noted that the use of terms such as "first" and "second" to limit components is merely for the convenience of distinguishing the corresponding components. Unless otherwise declared, the above terms do not have special meanings and should not be understood as limiting the scope of protection of this disclosure.

The above provides a detailed introduction to an air fryer with excellent cooking performance provided in this disclosure. Specific examples are used in this text to illustrate the principles and implementation methods of this disclosure. The description of the embodiments is only for the purpose of helping to understand the methods and core ideas of this disclosure. At the same time, for general technicians in the field, there will be changes in specific implementation methods and application ranges based on the ideas of this disclosure. In summary, the content of this disclosure should not be understood as limiting the scope of this disclosure.

### Industrial applicability

In the air fryer in this example, by setting multiple seasoning boxes on the body to hold water, oil, and other seasonings, and by using feeding mechanisms to deliver water, oil, and other seasonings to the food in the cooking cavity, not only can seasonings be directly added to the cooking cavity during the cooking process, greatly enriching the taste and texture of the food, but also better cooking results can be achieved.

## Claims

1. An air fryer with excellent cooking performance, including a body (10), a cooking cavity (11) located inside the body (10), and a frying system, wherein the cooking cavity (11) is connected to the frying system, and the body (10) has multiple seasoning boxes (30) on the outside, and the body (10) has multiple feeding mechanisms (40) corresponding to the seasoning boxes (30) inside, one end of the multiple feeding mechanisms (40) is connected to the corresponding seasoning box (30), and the other end is connected to the cooking cavity (11), the front side top of the body (10) has an installation slot (12) with an open top an installation cavity (13) on the rear side of the installation slot (12) in the body (10) has electrical components inside the bottom wall of the installation slot (12) is suitable for being a sloping surface structure that inclines from the rear side to the front side opening direction, the front side opening of the installation slot (12) is the outer shell of the body (10) **characterized in that** the installation slot (12) has a detachable seasoning box (30) with an inner cavity (31), the side wall top of the installation slot (12) has a recess (121) for fingers to reach in, the recess (121) is opposite the side wall of the seasoning box (30), where the top of the body (10) has a top cover (14) covering the installation cavity (13), and at least part of the connection between the top cover (14) and the side wall of the installation slot (12) has a water-blocking structure (50), the water-blocking structure (50) including a water-blocking rib (51), the water-blocking rib (51) is suitable for being located on the inner side of the top cover (14) and is formed by extending upward from the outer edge of the open top of the installation slot (12); and further, and a sealing member is provided at the connection between the inner wall of the installation slot (12) and the outer shell of the body (10), the inner wall of the installation slot (12) is suitable for being in contact with the outer shell of the body (10) through the sealing member.

2. The air fryer with excellent cooking performance according to claim 1, wherein the seasoning box (30) including a first seasoning box (32) and a second seasoning box (33), the feeding mechanism (40) including a first feeding mechanism (41) connected to the first seasoning box (32) and the cooking cavity (11), and a second feeding mechanism (42) connected to the second seasoning box (33) and the cooking cavity (11), the first seasoning box (32) and the second seasoning box (33) are arranged in parallel on the top of the body (10), the first seasoning box (32) and the second seasoning box (33) are detachably mounted on the top of the body (10); and
further, the first seasoning box (32) and the second seasoning box (33) are integrated, and the side walls of the first seasoning box (32) and the second seasoning box (33) have a visual area, and the visual area has capacity scale lines corresponding to the first seasoning box (32) and the second seasoning box (33).

3. The air fryer with excellent cooking performance according to claim 1, wherein one side of the body (10) has an open mouth connected to the cooking cavity (11), the open mouth has a flip door component, or the open mouth has a drawer-type food basket that can be inserted into the cooking cavity (11), the seasoning box (30) is mounted on the body (10) above the open mouth, the seasoning box (30) including at least one oil box for holding oil and at least one water box for holding water.

4. The air fryer with excellent cooking performance according to claim 1, wherein the inner wall of the recess (121) is an arc-shaped surface structure extending towards the inside of the installation slot (12), the front side of the installation slot (12) has a front opening corresponding to the front side wall of the seasoning box (30), the rear side top of the installation slot (12) has the recess (121), the recess (121) is suitable for being located in the middle of the rear side wall of the installation slot (12); and
further, the inner cavity (31) including a first inner cavity (311) and a second inner cavity (312), the seasoning box (30) has a vertical partition plate (34) for separating the first inner cavity (311) and the second inner cavity (312), the projection part of the partition plate (34) on the side wall of the installation slot (12) is located in the recess (121).

5. The air fryer with excellent cooking performance according to any one of claims 1 to 4, wherein the body (10) has an installation slot (12) with an open top, the installation slot (12) has a detachable seasoning box (30) with an inner cavity (31) that is connected to the cooking cavity (11), one of the seasoning box (30) and the installation slot (12) has a vertical guiding part (61) that extends and protrudes from both side walls, and the other has a guiding groove (62) that matches the guiding part (61), when the guiding part (61) is aligned with the opening of the guiding groove (62), the seasoning box (30) can be moved towards the bottom of the installation slot (12).

6. The air fryer with excellent cooking performance according to claim 5, wherein the guiding groove (62) is a structure that gradually decreases in width from the bottom wall towards the opening direction, when the seasoning box (30) is installed in the installation slot (12), at least part of the outer wall of the guiding part (61) is in contact with the corresponding inner wall of the guiding groove (62); and
further, one end of the guiding part (61) and the guiding groove (62) corresponding to the opening has an inclined guiding surface (611), the cross-sectional area of the guiding surface (611) is smaller than the cross-sectional area of the opening of the guiding groove (62), when the seasoning box (30) is installed in the installation slot (12), at least part of the outer wall of the guiding part (61) is in contact with the corresponding inner wall of the guiding groove (62).

7. The air fryer with excellent cooking performance according to claim 5, wherein the distance between the top of the guiding part (61) or the guiding groove (62) and the top of the side wall of the installation slot (12) is L, and satisfy L>0.

8. The air fryer with excellent cooking performance according to claim 5, wherein the inner cavity (31) including a first inner cavity (311) and a second inner cavity (312), there are a first plug (35) and a second plug (36) respectively connected to the first inner cavity (311) below and the second inner cavity (312) below; the body (10) has a first feeding mechanism (41) and a second feeding mechanism (42) connected to the cooking cavity (11), the first feeding mechanism (41) and the second feeding mechanism (42) including a first slot (411) and a second slot (421) respectively corresponding to the first plug (35) and the second plug (36) and located at the bottom of the installation slot (12), when the guiding part (61) is aligned with the opening of the guiding groove (62), the seasoning box (30) is moved towards the bottom of the installation slot (12), the first plug (35) and the second plug (36) are suitable for being detachably plugged into the first slot (411) and the second slot (421) respectively, the bottom of the first inner cavity (311) and the second inner cavity (312) respectively have a first outlet (313) and a second outlet (314) connected to the first plug (35) and the second plug (36), and the first plug (35) and the second plug (36) are respectively movably provided with the first blocking member (37) and the second blocking member (38) for closing the first outlet (313) and the second outlet (314); the first slot (411) and the second slot (421) have a first plunger (412) and a second plunger (422) extending upward, when the guiding part (61) is aligned with the opening of the guiding groove (62), and the seasoning box (30) is moved towards the bottom of the installation slot (12) until the first plug (35) and the second plug (36) are respectively plugged into the first slot (411) and the second slot (421), the first plunger (412) and the second plunger (422) are suitable for extending into the first plug (35) and the second plug (36) respectively to drive the first blocking member (37) and the second blocking member (38) to move upward, thereby opening the first outlet (313) and the second outlet (314).

9. The air fryer with excellent cooking performance according to any one of claims 1 to 8, wherein the body (10) has a detachable seasoning box (30) with an inner cavity (31) on the top, the inner cavity (31) including a first inner cavity (311) and a second inner cavity (312); the body (10) has a feeding mechanism (40) inside, the feeding mechanism (40) including a first feeding mechanism (41) and a second feeding mechanism (42) respectively connected to the cooking cavity (11) and the first inner cavity (311) and the second inner cavity (312), the second feeding mechanism (42) including a second pump (423), an oil spray nozzle (424) extending into the cooking cavity (11), an oil pipeline (425) connecting the second inner cavity (312) and the second pump (423) and the oil spray nozzle (424), the oil pipeline (425) including a first oil pipeline (4251), both ends of the first oil pipeline (4251) have threaded connecting heads (426), the first oil pipeline (4251) is suitable for being threadedly connected to the second pump (423) and the oil spray nozzle (424).

10. The air fryer with excellent cooking performance according to claim 9, wherein there is an annular flange (4241) extending outwardly on the outside of the oil spray nozzle (424), one side of the annular flange (4241) has a connecting piece (427) that can be removably mounted on the oil spray nozzle (424); the top of the cooking cavity (11) has an air duct plate (15), the air duct plate (15) has an oil spray hole (151), the oil spray nozzle (424) is suitable for extending into the cooking cavity (11) through the oil spray hole (151), the connecting piece (427) and the annular flange (4241) are suitable for being respectively located on both sides of the oil spray hole (151), in contact with both sides of the air duct plate (15) where the oil spray hole (151) is located, the inner side of the connecting piece (427) has a first internal thread, the outside of the oil spray nozzle (424) has a first external thread that matches the first internal thread, the connecting piece (427) is suitable for being threadedly connected to the oil spray nozzle (424), the oil spray nozzle (424) including an installation seat (4242) with an annular flange (4241) on the outside and a nozzle body (4243), the installation seat (4242) has a receiving groove connected to the oil pipeline (425), the inner wall of the receiving groove has a second internal thread, one end of the nozzle body (4243) has a connecting part that can be inserted into the receiving groove, the outside of the connecting part has a second external thread that matches the second internal thread, the connecting part of the nozzle body (4243) is suitable for being threadedly connected to the receiving groove of the installation seat (4242), the nozzle body (4243) has a nozzle cap (4244) sleeved on the outside, the inner side of the nozzle cap (4244) has a third internal thread, the outside of the nozzle body (4243) has a third external thread that matches the third internal thread, the nozzle cap (4244) is suitable for being threadedly connected to the nozzle body (4243).

11. The air fryer with excellent cooking performance according to claim 9, wherein the first feeding mechanism (41) including a first pump (413), a water spray nozzle (414) extending into the cooking cavity (11), and a water pipeline (415) connecting the first inner cavity (311) and the first pump (413) and the water spray nozzle (414), the water pipeline (415) including a first water pipeline (4151), and both ends of the first water pipeline (4151) have fasteners (416) that can be tightened, both ends of the first water pipeline (4151) are respectively plugged into the first pump (413) and the water spray nozzle (414), and are fixedly connected to the first pump (413) and the water spray nozzle (414) by the fasteners (416).

12. The air fryer with excellent cooking performance according to any one of claims 1 to 11, wherein the top of the body (10) has an installation slot (12) with an open top, the installation slot (12) has a detachable seasoning box (30) with an inner cavity (31), the inner cavity (31) including a first inner cavity (311) and a second inner cavity (312); the body (10) has an installation cavity (13), the installation cavity (13) has a feeding mechanism (40) connected to the cooking cavity (11) and the first inner cavity (311) and the second inner cavity (312), the feeding mechanism (40) including a first pump (413) and a second pump (423) respectively connected to the first inner cavity (311) and the second inner cavity (312); the body (10) has a heat dissipation air duct (16) connected to the installation cavity (13), the heat dissipation air duct (16) has a heat dissipation component (70) for generating a cooling airflow, the body (10) has a first air inlet (17) connected to the installation cavity (13) and the atmosphere near the first pump (413), a second air inlet (18) connected to the installation cavity (13) and the atmosphere near the second pump (423).

13. The air fryer with excellent cooking performance according to claim 12, wherein the installation cavity (13) has a control system (80) electrically connected to the feeding mechanism (40), the first pump (413) and the second pump (423) are respectively located on both sides of the control system (80), the rear side of the control system (80) has a drive system (90) electrically connected to the control system (80) and extended rearward to drive the heat dissipation component (70), the body (10) has a third air inlet (19) near the drive system (90); and
further, the top of the side wall of the installation slot (12) has a recess (121) for fingers to reach in to hold the seasoning box (30), the inner wall of the recess (121) is a round arc-shaped guiding structure extending from the top of the side wall of the installation slot (12) towards the bottom of the seasoning box (30), the installation cavity (13) has a control system (80) electrically connected to the feeding mechanism (40), the recess (121) has a fourth air inlet (122) connected to the installation cavity (13), the fourth air inlet (122) is suitable for being set near the control system (80), the inner side of the fourth air inlet (122) has a water-blocking rib (51), the water-blocking rib (51) is suitable for covering at least part of the fourth air inlet (122).

## Patentansprüche

1. Heißluftfritteuse mit hervorragender Garleistung, umfassend einen Körper (10), eine in dem Körper (10) befindliche Garkammer (11) und ein Frittiersystem, wobei die Garkammer (11) mit dem Frittiersystem verbunden ist, und wobei der Körper (10) an der Außenseite mehrere Würzmittelbehälter (30) aufweist, und wobei der Körper (10) im Inneren mehrere den Würzmittelbehältern (30) entsprechende Zuführmechanismen (40) aufweist, wobei ein Ende der mehreren Zuführmechanismen (40) mit dem entsprechenden Würzmittelbehälter (30) verbunden ist und das andere Ende mit der Garkammer (11) verbunden ist, wobei an einem oberen Abschnitt der Vorderseite des Körpers (10) eine Montagenut (12) mit einer offenen Oberseite vorgesehen ist, wobei ein Installationsraum (13), der sich in dem Körper (10) an der Rückseite der Montagenut (12) befindet, elektrische Komponenten im Inneren aufweist, wobei eine Bodenwand der Montagenut (12) dazu geeignet ist, als eine schräge Flächenstruktur ausgebildet zu sein, die von der Rückseite in Richtung der vorderseitigen Öffnung geneigt ist, wobei die vorderseitige Öffnung der Montagenut (12) die Außenhülle des Körpers (10) ist,
**dadurch gekennzeichnet, dass** die Montagenut (12) einen abnehmbaren Würzmittelbehälter (30) mit einem inneren Hohlraum (31) aufweist, wobei an einem oberen Abschnitt einer Seitenwand der Montagenut (12) eine Aussparung (121) vorgesehen ist, in die Finger hineingreifen können, wobei die Aussparung (121) der Seitenwand des Würzmittelbehälters (30) gegenüberliegt,
wobei der oberer Abschnitt des Körpers (10) eine obere Abdeckung (14) aufweist, die den Installationsraum (13) abdeckt, und wobei zumindest ein Teil der Verbindung zwischen der oberen Abdeckung (14) und der Seitenwand der Montagenut (12) eine wasserblockierende Struktur (50) aufweist, wobei die wasserblockierende Struktur (50) eine wasserblockierende Rippe (51) umfasst, wobei die wasserblockierende Rippe (51) dazu geeignet ist, sich an der Innenseite der oberen Abdeckung (14) zu befinden und durch Aufwärtsstrecken von dem äußeren Rand der offenen Oberseite der Montagenut (12) gebildet wird; und
wobei ferner ein Dichtungselement an der Verbindung zwischen der Innenwand der Montagenut (12) und der Außenhülle des Körpers (10) vorgesehen ist, wobei die Innenwand der Montagenut (12) dazu geeignet ist, über das Dichtungselement mit der Außenhülle des Körpers (10) in Kontakt zu stehen.

2. Heißluftfritteuse mit hervorragender Garleistung nach Anspruch 1, wobei der Würzmittelbehälter (30) einen ersten Würzmittelbehälter (32) und einen zweiten Würzmittelbehälter (33) umfasst, wobei der Zuführmechanismus (40) einen ersten Zuführmechanismus (41), der mit dem ersten Würzmittelbehälter (32) und der Garkammer (11) verbunden ist, und einen zweiten Zuführmechanismus (42), der mit dem zweiten Würzmittelbehälter (33) und der Garkammer (11) verbunden ist, umfasst, wobei der erste Würzmittelbehälter (32) und der zweite Würzmittelbehälter (33) parallel auf dem oberen Abschnitt des Körpers (10) angeordnet sind, wobei der erste Würzmittelbehälter (32) und der zweite Würzmittelbehälter (33) abnehmbar auf dem oberen Abschnitt des Körpers (10) montiert sind; und
wobei ferner der erste Würzmittelbehälter (32) und der zweite Würzmittelbehälter (33) integriert sind, und wobei die Seitenwände des ersten Würzmittelbehälters (32) und des zweiten Würzmittelbehälters (33) einen Sichtbereich aufweisen, wobei der Sichtbereich Füllstandsskalenlinien aufweist, die dem ersten Würzmittelbehälter (32) und dem zweiten Würzmittelbehälter (33) entsprechen.

3. Heißluftfritteuse mit hervorragender Garleistung nach Anspruch 1, wobei eine Seite des Körpers (10) eine mit der Garkammer (11) verbundene Öffnung aufweist, wobei die Öffnung eine Klapptürkomponente aufweist, oder wobei die Öffnung einen schubladenartigen Lebensmittelkorb aufweist, der in die Garkammer (11) eingeschoben werden kann, wobei der Würzmittelbehälter (30) an dem Körper (10) oberhalb der Öffnung montiert ist, wobei der Würzmittelbehälter (30) mindestens einen Ölbehälter zum Aufnehmen von Öl und mindestens einen Wasserbehälter zum Aufnehmen von Wasser umfasst.

4. Heißluftfritteuse mit hervorragender Garleistung nach Anspruch 1, wobei die Innenwand der Aussparung (121) eine bogenförmige Flächenstruktur ist, die sich in Richtung des Inneren der Montagenut (12) erstreckt, wobei die Vorderseite der Montagenut (12) eine vordere Öffnung aufweist, die der vorderen Seitenwand des Würzmittelbehälters (30) entspricht, wobei an einem oberen Abschnitt der Rückseite der Montagenut (12) die Aussparung (121) vorgesehen ist, wobei die Aussparung (121) dazu geeignet ist, sich in der Mitte der hinteren Seitenwand der Montagenut (12) zu befinden; und
wobei der innere Hohlraum (31) ferner einen ersten inneren Hohlraum (311) und einen zweiten inneren Hohlraum (312) umfasst, wobei der Würzmittelbehälter (30) eine vertikale Trennplatte (34) zum Trennen des ersten inneren Hohlraums (311) und des zweiten inneren Hohlraums (312) aufweist, wobei ein Projektionsbereich der Trennplatte (34) auf die Seitenwand der Montagenut (12) in der Aussparung (121) liegt.

5. Heißluftfritteuse mit hervorragender Garleistung nach einem der Ansprüche 1 bis 4, wobei der Körper (10) eine Montagenut (12) mit einer offenen Oberseite aufweist, die Montagenut (12) einen abnehmbaren Würzmittelbehälter (30) mit einem inneren Hohlraum (31) umfasst, der mit der Garkammer (11) verbunden ist, wobei einer von dem Würzmittelbehälter (30) und der Montagenut (12) ein vertikales Führungsteil (61) aufweist, das von beiden Seitenwänden erstreckt und vorsteht, und der andere eine Führungsnut (62) aufweist, die mit dem Führungsteil (61) zusammenpasst, und wobei, wenn das Führungsteil (61) mit der Öffnung der Führungsnut (62) ausgerichtet ist, der Würzmittelbehälter (30) in Richtung des Bodens der Montagenut (12) bewegt werden kann.

6. Heißluftfritteuse mit hervorragender Garleistung nach Anspruch 5, **dadurch gekennzeichnet, dass** die Führungsnut (62) eine Struktur ist, deren Breite von der Bodenwand in Richtung der Öffnung allmählich abnimmt, wobei, wenn der Würzmittelbehälter (30) in der Montagenut (12) installiert ist, mindestens ein Teil der Außenwand des Führungsteils (61) mit der entsprechenden Innenwand der Führungsnut (62) in Kontakt steht; und
wobei ferner ein der Öffnung der Führungsnut (62) entsprechendes Ende des Führungsteils (61) eine geneigte Führungsfläche (611) aufweist, wobei die Querschnittsfläche der Führungsfläche (611) kleiner als die Querschnittsfläche der Öffnung der Führungsnut (62) ist, wobei, wenn der Würzmittelbehälter (30) in der Montagenut (12) installiert ist, zumindest ein Teil der Außenwand des Führungsteils (61) mit der entsprechenden Innenwand der Führungsnut (62) in Kontakt steht.

7. Heißluftfritteuse mit hervorragender Garleistung nach Anspruch 5, wobei der Abstand zwischen der Oberseite des Führungsteils (61) oder der Führungsnut (62) und der Oberseite der Seitenwand der Montagenut (12) L beträgt und L>0 erfüllt ist.

8. Heißluftfritteuse mit hervorragender Garleistung nach Anspruch 5, wobei der innere Hohlraum (31) einen ersten inneren Hohlraum (311) und einen zweiten inneren Hohlraum (312) umfasst, und wobei ein erstes Steckteil (35) und ein zweites Steckteil (36) jeweils mit dem unteren Bereich des ersten inneren Hohlraums (311) und dem unteren Bereich des zweiten inneren Hohlraums (312) verbunden sind; wobei der Körper (10) einen ersten Zuführmechanismus (41) und einen zweiten Zuführmechanismus (42) aufweist, die mit der Garkammer (11) verbunden sind, wobei der erste Zuführmechanismus (41) und der zweite Zuführmechanismus (42) jeweils eine erste Nut (411) und eine zweite Nut (421) umfassen, die dem ersten Steckteil (35) bzw. dem zweiten Steckteil (36) entsprechen und am Boden der Montagenut (12) angeordnet sind, wobei, wenn der Führungsteil (61) mit der Öffnung der Führungsnut (62) ausgerichtet ist, der Würzmittelbehälter (30) in Richtung des Bodens der Montagenut (12) bewegt wird, wobei das erste Steckteil (35) und das zweite Steckteil (36) dazu geeignet sind, abnehmbar jeweils in die erste Nut (411) und die zweite Nut (421) eingesteckt zu werden, wobei der Boden des ersten inneren Hohlraums (311) und des zweiten inneren Hohlraums (312) jeweils einen ersten Auslass (313) und einen zweiten Auslass (314) aufweisen, die mit dem ersten Steckteil (35) bzw. dem zweiten Steckteil (36) verbunden sind, und wobei das erste Steckteil (35) und das zweite Steckteil (36) jeweils beweglich mit einem ersten Blockierelement (37) und einem zweiten Blockierelement (38) versehen sind, um den ersten Auslass (313) und den zweiten Auslass (314) zu verschließen; wobei die erste Nut (411) und die zweite Nut (421) einen ersten Stößel (412) und einen zweiten Stößel (422) aufweisen, die sich aufwärtsstrecken, wenn der Führungsteil (61) mit der Öffnung der Führungsnut (62) ausgerichtet ist und der Würzmittelbehälter (30) in Richtung des Bodens der Montagenut (12) bewegt wird, bis das erste Steckteil (35) und das zweite Steckteil (36) jeweils in die erste Nut (411) und die zweite Nut (421) eingesteckt sind, wobei der erste Stößel (412) und der zweite Stößel (422) dazu geeignet sind, sich jeweils in das erste Steckteil (35) und das zweite Steckteil (36) hineinzuerstrecken, um das erste Blockierelement (37) und das zweite Blockierelement (38) nach oben zu bewegen, wodurch der erste Auslass (313) und der zweite Auslass (314) geöffnet werden.

9. Heißluftfritteuse mit hervorragender Garleistung nach einem der Ansprüche 1 bis 8, wobei der Körper (10) an der Oberseite einen abnehmbaren Würzmittelbehälter (30) mit einem inneren Hohlraum (31) aufweist, wobei der innere Hohlraum (31) einen ersten inneren Hohlraum (311) und einen zweiten inneren Hohlraum (312) umfasst; wobei der Körper (10) im Inneren einen Zuführmechanismus (40) aufweist, wobei der Zuführmechanismus (40) einen ersten Zuführmechanismus (41) und einen zweiten Zuführmechanismus (42) umfasst, die jeweils mit der Garkammer (11) sowie dem ersten inneren Hohlraum (311) und dem zweiten inneren Hohlraum (312) verbunden sind, wobei der zweite Zuführmechanismus (42) eine zweite Pumpe (423), eine in die Garkammer (11) ragende Ölsprühdüse (424), eine Ölleitung (425) umfasst, die den zweiten inneren Hohlraum (312) mit der zweiten Pumpe (423) und der Ölsprühdüse (424) verbindet, wobei die Ölleitung (425) eine erste Ölleitung (4251) umfasst, wobei beide Enden der ersten Ölleitung (4251) Gewindeverbindungsköpfe (426) aufweisen, und die erste Ölleitung (4251) dazu geeignet ist, mit der zweiten Pumpe (423) und der Ölsprühdüse (424) verschraubt zu werden.

10. Heißluftfritteuse mit hervorragender Garleistung nach Anspruch 9, wobei an der Außenseite der Ölsprühdüse (424) ein sich nach außen erstreckender Ringflansch (4241) vorgesehen ist, wobei eine Seite des Ringflansches (4241) ein Verbindungsstück (427) aufweist, das an der Ölsprühdüse (424) abnehmbar montiert werden kann; wobei die Oberseite der Garkammer (11) eine Luftkanalplatte (15) umfasst, wobei die Luftkanalplatte (15) eine Ölsprühbohrung (151) aufweist, wobei die Ölsprühdüse (424) dazu geeignet ist, sich durch die Ölsprühbohrung (151) in die Garkammer (11) zu erstrecken, wobei das Verbindungsstück (427) und der Ringflansch (4241) dazu geeignet sind, jeweils auf beiden Seiten der Ölsprühbohrung (151) angeordnet zu sein und mit beiden Seiten der Luftkanalplatte (15), an denen sich die Ölsprühbohrung (151) befindet, in Kontakt zu stehen, wobei die Innenseite des Verbindungsstücks (427) ein erstes Innengewinde aufweist und die Außenseite der Ölsprühdüse (424) ein erstes Außengewinde aufweist, das mit dem ersten Innengewinde zusammenpasst, wobei das Verbindungsstück (427) dazu geeignet ist, mit der Ölsprühdüse (424) verschraubt zu werden, wobei die Ölsprühdüse (424) einen Montagesitz (4242) mit einem Ringflansch (4241) an der Außenseite und einen Düsenkörper (4243) umfasst, wobei der Montagesitz (4242) eine Aufnahmennut aufweist, die mit der Ölleitung (425) verbunden ist, wobei die Innenwand der Aufnahmennut ein zweites Innengewinde aufweist, wobei ein Ende des Düsenkörpers (4243) einen Verbindungsteil aufweist, der in die Aufnahmennut eingeschoben werden kann, wobei die Außenseite des Verbindungsteils ein zweites Außengewinde aufweist, das mit dem zweiten Innengewinde zusammenpasst, wobei der Verbindungsteil des Düsenkörpers (4243) dazu geeignet ist, mit der Aufnahmennut des Montagesitzes (4242) verschraubt zu werden, wobei an der Außenseite des Düsenkörpers (4243) eine Düsenkappe (4244) aufgesetzt ist, wobei die Innenseite der Düsenkappe (4244) ein drittes Innengewinde aufweist, wobei die Außenseite des Düsenkörpers (4243) ein drittes Außengewinde aufweist, das mit dem dritten Innengewinde zusammenpasst, wobei die Düsenkappe (4244) dazu geeignet ist, mit dem Düsenkörper (4243) verschraubt zu werden.

11. Heißluftfritteuse mit hervorragender Garleistung nach Anspruch 9, wobei der erste Zuführmechanismus (41) eine erste Pumpe (413), eine in die Garkammer (11) ragende Wassersprühdüse (414) und eine Wasserleitung (415) umfasst, die den ersten inneren Hohlraum (311) mit der ersten Pumpe (413) und der Wassersprühdüse (414) verbindet, wobei die Wasserleitung (415) eine erste Wasserleitung (4151) umfasst und beide Enden der ersten Wasserleitung (4151) mit festziehbaren Befestigungselementen (416) versehen sind, wobei beide Enden der ersten Wasserleitung (4151) jeweils in die erste Pumpe (413) und die Wassersprühdüse (414) eingesteckt und durch die Befestigungselemente (416) fest mit der ersten Pumpe (413) und der Wassersprühdüse (414) verbunden sind.

12. Heißluftfritteuse mit hervorragender Garleistung nach einem der Ansprüche 1 bis 11, wobei der obere Abschnitt des Körpers (10) eine Montagenut (12) mit einer offenen Oberseite aufweist, wobei die Montagenut (12) einen abnehmbaren Würzmittelbehälter (30) mit einem inneren Hohlraum (31) besitzt, wobei der innere Hohlraum (31) einen ersten inneren Hohlraum (311) und einen zweiten inneren Hohlraum (312) umfasst; wobei der Körper (10) einen Installationsraum (13) aufweist, wobei der Installationsraum (13) einen Zuführmechanismus (40) umfasst, der mit der Garkammer (11) sowie dem ersten inneren Hohlraum (311) und dem zweiten inneren Hohlraum (312) verbunden ist, wobei der Zuführmechanismus (40) eine erste Pumpe (413) und eine zweite Pumpe (423) umfasst, die jeweils mit dem ersten inneren Hohlraum (311) und dem zweiten inneren Hohlraum (312) verbunden sind; wobei der Körper (10) einen Wärmeableitungsluftkanal (16) umfasst, der mit dem Installationsraum (13) verbunden ist, wobei der Wärmeableitungsluftkanal (16) ein Wärmeableitungselement (70) zur Erzeugung eines Kühlluftstroms aufweist, und wobei der Körper (10) einen ersten Lufteinlass (17), der mit dem Installationsraum (13) und der Umgebungsluft in der Nähe der ersten Pumpe (413) verbunden ist, sowie einen zweiten Lufteinlass (18), der mit dem Installationsraum (13) und der Umgebungsluft in der Nähe der zweiten Pumpe (423) verbunden ist, umfasst.

13. Heißluftfritteuse mit hervorragender Garleistung nach Anspruch 12, wobei der Installationsraum (13) ein Steuersystem (80) aufweist, das elektrisch mit dem Zuführmechanismus (40) verbunden ist, wobei die erste Pumpe (413) und die zweite Pumpe (423) sich jeweils auf beiden Seiten des Steuersystems (80) befinden, die Rückseite des Steuersystems (80) ein Antriebssystem (90) aufweist, das elektrisch mit dem Steuersystem (80) verbunden ist und nach hinten erstreckt, um das Wärmeableitungselement (70) anzutreiben, wobei der Körper (10) einen dritten Lufteinlass (19) in der Nähe des Antriebssystems (90) aufweist; und
wobei ferner an einem oberen Abschnitt der Seitenwand der Montagenut (12) eine Aussparung (121) vorgesehen ist, in die Finger hineingreifen können, um den Würzmittelbehälter (30) zu halten, wobei die Innenwand der Aussparung (121) eine kreisbogenförmige Führungsstruktur ist, die sich von der Oberseite der Seitenwand der Montagenut (12) in Richtung des Bodens des Würzmittelbehälters (30) erstreckt, wobei der Installationsraum (13) ein Steuersystem (80) aufweist, das elektrisch mit dem Zuführmechanismus (40) verbunden ist, wobei die Aussparung (121) einen vierten Lufteinlass (122) aufweist, der mit dem Installationsraum (13) verbunden ist, wobei der vierte Lufteinlass (122) dazu geeignet ist, in der Nähe des Steuersystems (80) angeordnet zu sein, wobei die Innenseite des vierten Lufteinlasses (122) eine wasserblockierende Rippe (51) aufweist, wobei die wasserblockierende Rippe (51) dazu geeignet ist, zumindest einen Teil des vierten Lufteinlasses (122) abzudecken.

## Revendications

1. Friteuse à air avec d'excellentes performances de cuisson, comprenant un corps (10), une chambre de cuisson (11) située à l'intérieur du corps (10), et un système de friture, dans laquelle la chambre de cuisson (11) est reliée au système de friture, et le corps (10) comporte plusieurs boîtes à assaisonnements (30) à l'extérieur de celui-ci, et le corps (10) comporte plusieurs mécanismes d'alimentation (40) correspondant aux boîtes à assaisonnements (30) à l'intérieur, une extrémité des plusieurs mécanismes d'alimentation (40) est reliée à la boîte à assaisonnements (30) correspondante, et l'autre extrémité est reliée à la chambre de cuisson (11), une partie supérieure latérale avant du corps (10) comporte une fente d'installation (12) avec un sommet ouvert, une chambre d'installation (13) sur un côté arrière de la fente d'installation (12) dans le corps (10) comporte des composants électriques à l'intérieur de celle-ci, une paroi inférieure de la fente d'installation (12) est configurée comme structure à surface en pente qui s'incline à partir du côté arrière dans la direction d'une ouverture latérale avant, et l'ouverture latérale avant de la fente d'installation (12) sert de coque extérieure du corps (10),
**caractérisée en ce que** la fente d'installation (12) comporte une boîte à assaisonnements (30) amovible avec une chambre intérieure (31), le sommet de la paroi latérale de la fente d'installation (12) comporte un évidement (121) accessible pour les doigts, l'évidement (121) étant à l'opposé de la paroi latérale de la boîte à assaisonnements (30),
dans laquelle le sommet du corps (10) comporte un couvercle supérieur (14) recouvrant la chambre d'installation (13), et au moins une partie de la jonction entre le couvercle supérieur (14) et la paroi latérale de la fente d'installation (12) comporte une structure anti-eau (50), la structure anti-eau (50) comprenant une nervure anti-eau (51), la nervure anti-eau (51) étant configurée pour être située sur le côté intérieur du couvercle supérieur (14) et étant formée en s'étendant vers le haut à partir du bord extérieur du sommet ouvert de la fente d'installation (12) ; et
de plus, un élément d'étanchéité est prévu à la jonction entre la paroi intérieure de la fente d'installation (12) et la coque extérieure du corps (10), la paroi intérieure de la fente d'installation (12) étant configurée pour être en contact avec la coque extérieure du corps (10) à travers l'élément d'étanchéité.

2. Friteuse à air avec d'excellentes performances de cuisson selon la revendication 1, dans laquelle la boîte à assaisonnements (30) comprend une première boîte à assaisonnements (32) et une deuxième boîte à assaisonnements (33), le mécanisme d'alimentation (40) comprend un premier mécanisme d'alimentation (41) relié à la première boîte à assaisonnements (32) et à la chambre de cuisson (11), et un deuxième mécanisme d'alimentation (42) est relié à la deuxième boîte à assaisonnements (33) et à la chambre de cuisson (11), la première boîte à assaisonnements (32) et la deuxième boîte à assaisonnements (33) sont disposées en parallèle sur le sommet du corps (10), la première boîte à assaisonnements (32) et la deuxième boîte à assaisonnements (33) sont montées de manière amovible sur le sommet du corps (10) ; et
de plus, la première boîte à assaisonnements (32) et la deuxième boîte à assaisonnements (33) sont intégrées, et des parois latérales de la première boîte à assaisonnements (32) et de la deuxième boîte à assaisonnements (33) comportent chacune une zone visuelle, et la zone visuelle comporte des lignes de graduation de capacité correspondant à la première boîte à assaisonnements (32) et à la deuxième boîte à assaisonnements (33).

3. Friteuse à air avec d'excellentes performances de cuisson selon la revendication 1, dans laquelle une ouverture reliée à la chambre de cuisson (11) est prévue sur un côté du corps (10), l'ouverture comporte un volet basculant ou l'ouverture comporte un panier alimentaire de type tiroir qui est insérable dans la chambre de cuisson (11), la boîte à assaisonnements (30) est montée sur le corps (10) au-dessus de l'ouverture, et la boîte à assaisonnements (30) comprend au moins une boîte à huile pour contenir de l'huile et au moins une boîte à eau pour contenir de l'eau.

4. Friteuse à air avec d'excellentes performances de cuisson selon la revendication 1, dans laquelle la paroi intérieure de l'évidement (121) est une structure à surface en arc s'étendant vers l'intérieur de la fente d'installation (12), le côté avant de la fente d'installation (12) comporte une ouverture avant correspondant à la paroi latérale avant de la boîte à assaisonnements (30), une partie supérieure latérale arrière de la fente d'installation (12) comporte l'évidement (121), et l'évidement (121) est configuré pour être située au milieu de la paroi latérale arrière de la fente d'installation (12) ; et
de plus, la chambre intérieure (31) comprend une première chambre intérieure (311) et une deuxième chambre intérieure (312), la boîte à assaisonnements (30) comporte une plaque de séparation (34) verticale pour séparer la première chambre intérieure (311) et la deuxième chambre intérieure (312), et une portion saillante de la plaque de séparation (34) sur la paroi latérale de la fente d'installation (12) est située dans l'évidement (121).

5. Friteuse à air avec d'excellentes performances de cuisson selon l'une quelconque des revendications 1 à 4, dans laquelle le corps (10) comporte une fente d'installation (12) avec un sommet ouvert, la fente d'installation (12) comporte une boîte à assaisonnements (30) amovible avec une chambre intérieure (31) qui est reliée à la chambre de cuisson (11), l'une de la boîte à assaisonnements (30) et de la fente d'installation (12) comporte une portion de guidage (61) verticale qui s'étend et fait saillie des deux parois latérales, et l'autre comporte une rainure de guidage (62) qui correspond à la portion de guidage (61), lorsque la portion de guidage (61) est alignée avec l'ouverture de la rainure de guidage (62), la boîte à assaisonnements (30) se déplace vers le fond de la fente d'installation (12).

6. Friteuse à air avec d'excellentes performances de cuisson selon la revendication 5, dans laquelle la rainure de guidage (62) est une structure dont la largeur diminue progressivement à partir de la paroi inférieure en direction d'ouverture, lorsque la boîte à assaisonnements (30) est installée dans la fente d'installation (12), au moins une partie de la paroi extérieure de la portion de guidage (61) entre en contact avec la paroi intérieure correspondante de la rainure de guidage (62) ; et
de plus, une extrémité de la portion de guidage (61) correspondant à l'ouverture de la rainure de guidage (62) comporte une surface de guidage (611) inclinée, la surface de section transversale de la surface de guidage (611) est inférieure à la surface de section transversale de l'ouverture de la rainure de guidage (62), lorsque la boîte à assaisonnements (30) est installée dans la fente d'installation (12), au moins une partie de la paroi extérieure de la portion de guidage (61) entre en contact avec la paroi intérieur correspondante de la rainure de guidage (62).

7. Friteuse à air avec d'excellentes performances de cuisson selon la revendication 5, dans laquelle une distance entre le sommet de la portion de guidage (61) ou la rainure de guidage (62) et le sommet de la paroi latérale de la fente d'installation (12) est notée comme L, et satisfait à L>0.

8. Friteuse à air avec d'excellentes performances de cuisson selon la revendication 5, dans laquelle la chambre intérieure (31) comprend une première chambre intérieure (311) et une deuxième chambre intérieure (312), une première fiche (35) et une deuxième fiche (36) sont prévues et reliées à la première chambre intérieure (311) en dessous et à la deuxième chambre intérieure (312) en dessous respectivement ; le corps (10) comporte un premier mécanisme d'alimentation (41) et un deuxième mécanisme d'alimentation (42) reliés à la chambre de cuisson (11), le premier mécanisme d'alimentation (41) et le deuxième mécanisme d'alimentation (42) comprennent respectivement une première fente (411) et une deuxième fente (421) qui correspondent respectivement à la première fiche (35) et à la deuxième fiche (36) et sont situées au fond de la fente d'installation (12), lorsque la portion de guidage (61) est alignée avec l'ouverture de la rainure de guidage (62), la boîte à assaisonnements (30) se déplace vers le fond de la fente d'installation (12), la première fiche (35) et la deuxième fiche (36) sont configurées pour être insérées de manière amovibles dans la première fente (411) et la deuxième fente (421) respectivement, le fond de la première chambre intérieure (311) et de la deuxième chambre intérieure (312) sont pourvues respectivement d'une première prise (313) et d'une deuxième prise (314) reliées à la première fiche (35) et à la deuxième fiche (36), et la première fiche (35) et la deuxième fiche (36) sont pourvues respectivement de manière mobile d'un premier élément de blocage (37) et d'un deuxième élément de blocage (38) pour fermer la première prise (313) et la deuxième prise (314) ; la première fente (411) et la deuxième fente (421) comportent un premier piston (412) et un deuxième piston (422) s'étendant vers le haut, lorsque la portion de guidage (61) est alignée avec l'ouverture de la rainure de guidage (62) et que la boîte à assaisonnements (30) se déplace vers le fond de la fente d'installation (12) jusqu'à ce que la première fiche (35) et la deuxième fiche (36) soient respectivement insérées dans la première fente (411) et la deuxième fente (421), le premier piston (412) et le deuxième piston (422) sont configurés pour s'étendre respectivement jusqu'à l'intérieure de la première fiche (35) et de la deuxième fiche (36) afin d'entraîner le premier élément de blocage (37) et le deuxième élément de blocage (38) à se déplacer vers le haut, ouvrant ainsi la première prise (313) et la deuxième prise (314).

9. Friteuse à air avec d'excellentes performances de cuisson selon l'une quelconque des revendications 1 à 8, dans laquelle le corps (10) comporte une boîte à assaisonnements (30) amovible avec une chambre intérieure (31) sur le sommet, la chambre intérieure (31) comportant une première chambre intérieure (311) et une deuxième chambre intérieure (312) ; le corps (10) comprend un mécanisme d'alimentation (40) à l'intérieur, le mécanisme d'alimentation (40) comportant un premier mécanisme d'alimentation (41) et un deuxième mécanisme d'alimentation (42) reliés respectivement à la chambre de cuisson (11) et à la première chambre intérieure (311) et à la deuxième chambre intérieure (312), le deuxième mécanisme d'alimentation (42) comprenant une deuxième pompe (423), une buse de pulvérisation d'huile (424) s'étendant jusqu'à l'intérieur de la chambre de cuisson (11), un conduit d'huile (425) reliant la deuxième chambre intérieure (312) à la deuxième pompe (423) et à la buse de pulvérisation d'huile (424), le conduit d'huile (425) comprenant un premier conduit d'huile (4251), dans lequel deux extrémités du premier conduit d'huile (4251) comportent des têtes de liaison filetées (426), et le premier conduit d'huile (4251) est configuré pour être relié par filetage à la deuxième pompe (423) et à la buse de pulvérisation d'huile (424).

10. Friteuse à air avec d'excellentes performances de cuisson selon la revendication 9, dans laquelle une bride annulaire (4241) s'étend vers l'extérieur à l'extérieur de la buse de pulvérisation d'huile (424), un côté de la bride annulaire (4241) comporte une pièce de liaison (427) qui peut être montée de manière amovible sur la buse de pulvérisation d'huile (424) ; le sommet de la chambre de cuisson (11) comporte une plaque de conduit d'air (15), la plaque de conduit d'air (15) comporte un trou de pulvérisation d'huile (151), la buse de pulvérisation d'huile (424) est configurée pour s'étendre jusqu'à l'intérieur de la chambre de cuisson (11) par le trou de pulvérisation d'huile (151), la pièce de liaison (427) et la bride annulaire (4241) sont placées respectivement de part et d'autre du trou de pulvérisation d'huile (151), en contact avec deux côtés de la plaque de conduit d'air (15) où se trouve le trou de pulvérisation d'huile (151), le côté intérieur de la pièce de liaison (427) comporte un premier filetage intérieur, l'extérieur de la buse de pulvérisation d'huile (424) comporte un premier filetage extérieur correspondant au premier filetage intérieur, la pièce de liaison (427) est configurée pour être reliée par filetage à la buse de pulvérisation d'huile (424), la buse de pulvérisation d'huile (424) comprenant un siège d'installation (4242) avec une bride annulaire (4241) à l'extérieur et un corps de buse (4243), le siège d'installation (4242) comporte une rainure de réception reliée au conduit d'huile (425), la paroi intérieure de la rainure de réception comporte un deuxième filetage intérieur, une extrémité du corps de buse (4243) comporte une portion de liaison qui est insérable dans la rainure de réception, l'extérieur de la portion de liaison comporte un deuxième filetage extérieur correspondant au deuxième filetage intérieur, la portion de liaison du corps de buse (4243) est configurée pour être reliée par filetage à la rainure de réception du siège d'installation (4242), le corps de buse (4243) comporte un capuchon de buse (4244) manchonné à l'extérieur, le côté intérieur du capuchon de buse (4244) comporte un troisième filetage intérieur, l'extérieur du corps de buse (4243) comporte un troisième filetage extérieur correspondant au troisième filetage intérieur, et le capuchon de buse (4244) est configuré pour être fixé par filetage au corps de buse (4243).

11. Friteuse à air avec d'excellentes performances de cuisson selon la revendication 9, dans laquelle le premier mécanisme d'alimentation (41) comprend une première pompe (413), une buse de pulvérisation d'eau (414) s'étend jusqu'à l'intérieur de la chambre de cuisson (11), un conduit d'eau (415) relie la première chambre intérieure (311) à la première pompe (413) et à la buse de pulvérisation d'eau (414), le conduit d'eau (415) comprend un premier conduit d'eau (4151), deux extrémités du premier conduit d'eau (4151) comportent des éléments de serrage (416) configurés pour être serrés, deux extrémités du premier conduit d'eau (4151) sont insérées respectivement dans la première pompe (413) et la buse de pulvérisation d'eau (414), et sont reliées de manière fixée à la première pompe (413) et à la buse de pulvérisation d'eau (414) par l'intermédiaire des éléments de serrage (416).

12. Friteuse à air avec d'excellentes performances de cuisson selon l'une quelconque des revendications 1 à 11, dans laquelle le sommet du corps (10) comporte une fente d'installation (12) avec un sommet ouvert, la fente d'installation (12) comporte une boîte à assaisonnements (30) amovible avec une chambre intérieure (31), la chambre intérieure (31) comprenant une première chambre intérieure (311) et une deuxième chambre intérieure (312) ; le corps (10) comporte une chambre d'installation (13), la chambre d'installation (13) comportant un mécanisme d'alimentation (40) relié à la chambre de cuisson (11) et à la première chambre intérieure (311) et à la deuxième chambre intérieure (312), le mécanisme d'alimentation (40) comprenant une première pompe (413) et une deuxième pompe (423) reliées respectivement à la première chambre intérieure (311) et à la deuxième chambre intérieure (312) ; le corps (10) comporte un conduit d'air de dissipation de chaleur (16) relié à la chambre d'installation (13), le conduit d'air de dissipation de chaleur (16) comportant un composant de dissipation de chaleur (70) pour générer un flux d'air de refroidissement, et le corps (10) comporte une première entrée d'air (17) reliée à la chambre d'installation (13) et à l'atmosphère proche de la première pompe (413), une deuxième entrée d'air (18) reliée à la chambre d'installation (13) et à l'atmosphère proche de la deuxième pompe (423).

13. Friteuse à air avec d'excellentes performances de cuisson selon la revendication 12, dans laquelle la chambre d'installation (13) comporte un système de commande (80) connecté électriquement au mécanisme d'alimentation (40), la première pompe (413) et la deuxième pompe (423) sont situées respectivement sur deux côtés du système de commande (80), le côté arrière du système de commande (80) comporte un système d'entraînement (90) connecté électriquement au système de commande (80) et s'étendant vers l'arrière pour entraîner le composant de dissipation de chaleur (70), le corps (10) comporte une troisième entrée d'air (19) proche du système d'entraînement (90) ; et
de plus, le sommet de la paroi latérale de la fente d'installation (12) comporte un évidement (121) accessible pour les doigts afin de tenir la boîte à assaisonnements (30), la paroi intérieure de l'évidement (121) est une structure de guidage en arc arrondi s'étendant à partir du sommet de la paroi latérale de la fente d'installation (12) vers le fond de la boîte à assaisonnements (30), la chambre d'installation (13) comporte un système de commande (80) connecté électriquement au mécanisme d'alimentation (40), l'évidement (121) comporte une quatrième entrée d'air (122) reliée à la chambre d'installation (13), la quatrième entrée d'air (122) est configurée pour être placée proche du système de commande (80), le côté intérieur de la quatrième entrée d'air (122) comporte une nervure anti-eau (51), et la nervure anti-eau (51) est configurée pour recouvrir au moins en partie la quatrième entrée d'air (122).
